# EUROPEAN PATENT SPECIFICATION

(11) **EP 3 554 966 B1**
(45) Date of publication and mention of the grant of the patent: **23.09.2020**
(21) Application number: 17837900.4
(22) Date of filing: 11.12.2017
(51) Int. Cl.: B65D 90/00

(54) **CORNER PIECE FOR FORMING A CORNER OF A CONTAINER, CONTAINER PROVIDED WITH SUCH CORNER PIECES, AND, GRIP MECHANISM AND GRIPPER WHICH CAN COOPERATE WITH SUCH CORNER PIECES**
ECKSTÜCK ZUR HERSTELLUNG EINER ECKE EINES BEHÄLTERS, BEHÄLTER MIT SOLCHEN ECKSTÜCKEN SOWIE GREIFMECHANISMUS UND GREIFER ZUR KOOPERATION MIT SOLCHEN ECKSTÜCKEN
PIÈCE D'ANGLE POUR FORMER UN ANGLE D'UN RÉCIPIENT, RÉCIPIENT POURVU DESDITES PIÈCES D'ANGLE, ET MÉCANISME DE PRÉHENSION ET ÉLÉMENT DE PRÉHENSION QUI PEUVENT COOPÉRER AVEC LESDITES PIÈCES D'ANGLE

(30) Priority: 13.12.2016 BE 201605924
(43) Date of publication of application: 23.10.2019
(73) Proprietor: Caming Solutions BVBA, 1050 Elsene (BE)
(72) Inventor: VANCAMPEN, Tim, 1050 Elsene (BE); DE RYCKE, Wim, 9120 Beveren (BE); CLEVERS, David, 9051 Gent (Sint-Denijs-Westrem) (BE); DE JONGHE, Bruno, 9150 Bazel (BE); INGHAM, Christopher, 1050 Elsene (BE)
(74) Representative: Van hunsel, Lieven M.S.
(86) International application number: PCT/IB2017/057776
(87) International publication number: WO 2018/109631

(56) References cited:
- EP-A1- 2 984 019
- WO-A1-2013/006141
- DE-U1- 29 520 823
- GB-A- 1 417 816
- US-A- 4 591 307
- US-A- 5 012 999

## Description

The present invention relates to a corner piece for forming a corner.

The intention hereby is that such an improved corner piece is worked into or forms part of a chassis or supporting frame of a container, which, in particular, is a freight container intended for the transport of freight.

The present invention in particular relates to such an improved corner piece which is intended for handling containers and/or for stacking and/or securing containers on top of one another, on a quay, on the deck of a ship or another means of transport, such as a truck or a train or the like
A freight container, often also referred to as shipping container or container in short, is a standardised beam-shaped box for the transport of goods.

By using standard dimensions the container can be transported both by road, water and rail, without having to be loaded or unloaded.
The most commonly used containers, including the so-called ISO-containers, are built around a chassis or supporting frame which is substantially made up of twelve supporting beams.

As is known, the twelve supporting beams of such chassis of a freight container are connected to each other at the far ends by means of corner pieces, such that it forms a beam or box-shaped volume.

Four bottom beams as well as four roof beams are hereby each mutually connected by means of such corner pieces in the shape of a rectangle so as to form a bottom framework and a roof framework respectively.

The roof framework and the bottom framework are further connected to the aforesaid corner pieces by means of four upright supporting beams or corner columns, referred to as "corner posts" in jargon
When the container is meant for transport of general cargo, the chassis is usually closed along all sides closed by means of panels, whereby one of the short ends of the beam-shaped container has lockable doors which allow access to the internal space.

The structural strength of such a container is mainly provided by the chassis. The roof wall and the side walls are typically made of profiled steel plates, while the bottom wall is usually made of wood with a water-resistant bottom.

There are also containers that are intended for the transport of liquefied gases and liquids rather than for piece goods, such as for example the so-called intermodal cryogenic ISO containers.
They consist of a similar framework whereby in the inner space thereof a tank is provided for storing the liquefied gases or liquids.

The present invention relates to corner pieces meant for all sorts of containers, regardless of their design which is tailored to the type of freight for which they are intended.
In general, containers must be able to undergo diverse handling.

Thus, containers must be often moved or lifted, for example as of a means of transport such as a truck, a train or ship to a quay, and vice versa, or between several means of transport.

Several containers are hereby often stacked on top of one another and the containers are secured, for example to the means of transport, or the like, or they are coupled to each other, or a combination of the above-mentioned actions.

In the known freight containers that are currently used internationally by default, the so-called ISO containers, the eight corner points of the chassis are provided with what are called "corner castings" or ISO-standardised corner pieces.

The ISO-standardised corner pieces are at a precisely defined distance from each other and perform various critical functions.

A container should and may only support on its four ISO-standardised corner pieces.

The ISO-standardised corner pieces usually carry at least 8.5 tonnes each.

Such known ISO-standardised corner pieces consist mainly of a hollow box made of steel, substantially cube-shaped or beam-shaped, of which three sides or surfaces, when fitted, are essentially invisible due to their connection to the corner posts on which they are provided on the one hand, and to the two leaning supporting beams of either a roof framework or a bottom framework on the other hand.

The three visible sides or surfaces are provided with a substantially oval opening that opens into an inner hollow space in the corner piece and that can thus serve as a receptor for a gripping means, stacking means or locking means provided with a protrusion which can be inserted in the opening.

These ISO-standardised corner pieces make it possible for the ISO containers that are equipped with the latter to easily undergo the above-mentioned various manipulations One of the major advantages of the use of the ISO-standardised corner pieces consists in that they can cooperate with numerous gripping means, stacking means, locking means and coupling means.

The ISO-standardised corner pieces allow for example to pick up ISO containers with what are called "spreaders" or grippers, which are usually provided on quay cranes, stacking cranes and other handling means such as forklift trucks, reach stackers and what are called "straddle carriers" in jargon.

To that end, such grippers for ISO containers are provided with four gripper arms which conform to or may be conformed to the four corners of the roof framework of a freight container, which gripper arms are each provided with typical gripping means, called "hammerlocks" in jargon.

Such gripping means or hammerlocks exist in various forms, but they have as a common feature that they are provided with a rotatable protrusion having an asymmetrically widened end, the arrangement being such that the protrusion can be led in the oval opening, at least when the asymmetrically widened end is positioned in a first orientation, while this asymmetrically widened end, after having been rotated in the inner hollow space of the ISO-standardised corner piece, can only be removed from the oval opening under limited conditions.

In practice such grippers of the handling means, such as straddle carriers and quay cranes are provided with externally actuated gripping means or hammerlocks.

In order to stack ISO containers fitted with ISO-standardised corner pieces on board, use is made of stacking means in the shape of what are called "stacking cones", which consist of a plate element provided with a bulge on either side fitting in an opening of an ISO-standardised corner piece and with which any mutual displacement of stacked containers resulting from horizontal forces can be prevented.

Placing these stacking means in the shape of "stacking cones" on the four corners between two containers to be stacked is usually done manually by a stevedore or operator, as well as the removal of these "stacking cones", which is a time-consuming job and often also dangerous work.

The ISO-standardised corner pieces also make it possible for ISO containers fitted with them to be secured on a site by means of locking means, for example provided on the deck of a ship or on a truck, a wagon or another type of loading wagon.

Securing such an ISO container on a site or on a vehicle is done by means of locking means, which usually consist of twist locks, which are usually permanently installed on the site concerned or on the means of transport concerned, and which typically require the manual operation of a stevedore.

In particular when loading a vehicle, the time-consuming fixation of the locking means adversely affects the efficiency of the transport.

A container which has just been loaded on a truck, a wagon or another load wagon by a container crane or handling device must be fixed by means of the aforesaid locking means, and this operation keeps the loading place occupied in the meantime.

Another operation which is often required with containers consists of a combination of the preceding operations, i.e. stacking the containers on a ship whereby the containers are additionally mutually connected or, in other words, locked to each other, in order to prevent any shifting and/or tilting of the containers in relation to the deck or in relation to one another.

In the case of ISO containers fitted with ISO-standardised corner pieces, coupling means are used to that end having a guiding or a positioning function during the stacking, as well as a locking function for the coupling.

To that end as well, coupling means in the shape of intermediary twist-locks are usually provided, fitted with two ends, whereby each of these ends can be locked to the bottom and top container respectively.

Unlike the stacking means in the shape of stacking cones, the coupling means in the shape of intermediary "twist locks" cannot only resist horizontal forces, but also separation forces which occur in case of any imminent tilting of containers.

A known disadvantage of the use of such known coupling means or intermediary twist locks for coupling containers is that their locking also requires a manual action.

However, not all such intermediary twist locks require an equal number of manual operations

The fully manual double twist locks obviously require most manual operations, whereby when coupling two containers, said intermediary twist locks must be manually locked on both containers.

Nowadays, however, semi-automatically locking intermediary twist locks are most often used, which are to be manually positioned at the bottom of a first container, but when this container is placed on a second container, the locking is accomplished automatically.

However, when lifting the aforesaid first container from the second container again, the semi-automatically locking twist locks must be manually released again first, which is a very time-consuming and dangerous task, especially with high-stacked containers.

Indeed, in the case of high-stacked containers, a stevedore must unlock the semi-automatic twist locks with long rods, or the stevedore must be brought in the vicinity of the intermediary twist-lock to unlock them before the container can be unloaded.

Containers can also be mutually connected by means of fully automatically lockable intermediary twist locks, which solves the latter problem, so that the last placed container can be lifted from a previously provided container without any direct manual intervention of a stevedore.

Disconnecting containers which are coupled by means of such fully automatically lockable, intermediary twist locks is done in particular by means of a combined lifting and turning motion or a so-called "twist motion" of the container, performed with the "spreader.

Removing these fully automatically lockable, intermediary twist locks from the bottom of a lifted container still requires a manual operation, however.

Further, the fully automatically lockable, intermediary twist locks must be correctly placed on the container according to a specific pattern in order to make the aforesaid "twist motion" for detaching the container actually work.

In order to couple containers, the fully automatically lockable, intermediary twist locks are provided with a protrusion on one end with a laterally extending bulge, which hereafter will be called a nose, whereby one must make sure, when providing these intermediary twist locks, that the noses are oriented in a first direction on a first short end and that the noses on the opposite short end are oriented in the opposite direction.

Mistakes made while placing these fully automatically lockable, intermediary twist locks can result in a huge loss of time and thus economic damage, when a wrong placement hampers the twist motion for uncoupling.

From the preceding it is clear that the ISO-standardised corner pieces have many advantages but there are also a great number of disadvantages.

First, it appears that in many cases, when manipulating containers provided with such ISO-standardised corner pieces, manual actions are required which are time-consuming and thus reduce the efficiency of the transport processes, while in addition the manual operations may be often dangerous for the operators.

Another disadvantage of the known ISO-standardised corner pieces consists in that they do not offer a standardised solution to the different needs when manipulating a container, resulting in many diverse tools being required, in the shape of very diverse gripping means, stacking means, locking means and coupling means, as described above. Document US 4,591,307 discloses a corner piece according to the preamble of claim 1; document GB 1 417 816 discloses a grip mechanism according to the preamble of claim 20.

The purpose of the present invention is therefore to provide a solution to one or several of the aforesaid or possible other disadvantages.
Another purpose of the invention is to develop a system that allows for little or no human errors, resulting in a safer system.
Yet another purpose of the invention consists in ensuring a smooth transition to a new and more efficient system for handling and securing containers, whereby with the new system also the ISO-standardised containers provided with ISO-standardised corner pieces that are currently in use can still be used without any problems, in order to allow for a gradual replacement.

It is also a purpose of the invention to offer a solution, whereby the manipulation of containers, such as the moving thereof and the securing and coupling to each other, can be done entirely using a spreader or gripper, whereby not a single manual intervention of operators or stevedores is required.

Another purpose of the invention is to provide such solution whereby only a minimal modification to the existing spreaders or grippers will suffice, e.g. by addition of a relatively simple module or the like to be mounted on an existing gripper.

To this end, the invention relates primarily to a corner pieces according to claim 1.

The invention also relates to a grip mechanism according to claim 20.

More specifically such grip mechanism according to the invention at least has:
- gripping means which via the grip opening can be inserted in the hollow body of the corner piece to grip the corner piece; and,
- means to move or activate the movement of the movable coupling element to the maximally protruding position, the fully retracted position and as the case may be to one or several partially protruding positions.

In a less elementary form the invention also relates to a container which at least has a bottom framework, a roof framework and at least four corner posts, which corner posts reach from the roof framework to the bottom framework, and whereby every corner post on one of its ends is provided with a roof corner piece which is part of the roof framework, and on the other end with a bottom corner piece which is part of the bottom framework and whereby the four roof corner pieces which are part of the roof framework are improved corner pieces according to the invention of a type as described above.

Furthermore, another less elementary aspect of the invention also relates to a gripper for manipulating a container according to the invention, whereby such a gripper is provided with four grip mechanisms which can each cooperate with a corresponding improved roof corner piece of the container.

A first very important advantage of an improved corner piece according to the invention consists in that the improved corner pieces make it possible to manufacture containers which can be stacked on top of one another, can be lifted from one another, can be coupled to one another and can be detached from one another without any additional separate tools such as "stacker cones" or "twist locks" or the like being required, and without any manual actions being necessary.

First of all, this implies that a lot of manual labour can be saved and much time can be gained, making the transport processes more efficient and resulting in reduced transport costs.

Moreover, such corner pieces according to the invention contribute greatly to the safety of the work force having to manipulate containers which are fitted with such corner pieces.

Further, the improved corner pieces according to the invention allow for a very thorough standardisation and automation of the transport processes with containers, whereby the coupling means or stacking means are integrated in the containers themselves and are controllable via a remote, non-manual actuator.

Another big advantage of an improved corner piece according to the invention is that the transition to the new system according to the invention can be done simply by relatively small adjustments to the existing systems.

Furthermore, the transition can be done gradually considering that the new system is compatible with the existing systems.

With the intention of better showing the characteristics of the invention, hereafter by way of an example without any limiting nature, a number of preferred embodiments of an improved corner piece, a container, a grip mechanism and a gripper according to the invention are described, with reference to the accompanying drawings, wherein:
figures 1 to 4 show a perspective view of a first embodiment of a corner piece according to the invention whereby the coupling element thereof is placed respectively in a fully retracted position, an intermediate position; a maximally protruding position and a partially protruding position;
figure 5 is a cross-section of the corner piece in figure 1 according to the line V-V;
figure 6 shows a perspective view of two corner pieces placed on top each other but not coupled, more specifically an ISO-standardised corner piece that is placed on a corner piece according to the invention in an embodiment according to figure 1;
figure 7 is a cross-section of the corner pieces of figure 6 according to the line VII-VII;
figures 8 and 9 are cross-sections of the corner piece according to the invention in the position as shown in figure 2, according to the sections indicated with VIII-VIII and IX-IX respectively;
figures 10 and 11 are cross-sections of the corner piece according to the invention in the position as shown in figure 3, according to the sections indicated with X_X and IX-IX respectively;
figure 12 shows a perspective view of the corner pieces of figure 6 placed on top of each other, this time coupled;
figures 13 and 14 are cross-sections of the corner pieces of figure 12, according to the sections indicated with XIII-XIII and XIV and XIV respectively;
figures 15 and 16 are cross-sections of the corner piece according to the invention in the position as shown in figure 4, according to the sections indicated with XV-XV and XVI-XVI respectively;
figure 17 is a cross-section of two corner pieces according to figure 6 that is similar to the cross-section shown in figure 14, but for the position of the coupling element as shown in figure 4;
figure 18 shows a perspective view of an alternative embodiment of an improved corner piece according to the invention, whereby the coupling element is in a fully retracted position as in figure 1;
figures 19 and 20 are cross-sections of the corner piece according to the invention in the position as shown in figure 18, according to the sections indicated with XIX-XIX en XX-XX respectively;
figure 21 is a cross-section of the corner piece of figure 18 according to the line XXI-XXI in figure 20;
figure 22 is a cross-section of the corner piece of figure 18 similar to the cross-section shown in figure 10, more specifically when the coupling element is in the maximally protruding position;
figure 23 is a cross-section of the corner piece according to the line XXIII-XXIII in figure 22; figure 24 is a cross-section as in figure 13 of coupled corner pieces, but whereby the bottom corner piece is a corner piece according to figure 18 is;
figure 25 is a cross-section according to the line XXV-XXV shown in figure 24;
figure 26 is a cross-section of the corner piece of figure 18 similar to the cross-sections of figures 20 and 22, whereby this time the coupling element is in a partially protruding position;
figure 27 is a cross-section of the corner piece of figure 18 according to the line XXVII-XXVII of figure 26;
figure 28 is a cross-section as in figure 24 of two corner pieces placed on top of each other, whereby the coupling element of the bottom corner piece is in the partially protruding position as shown in figure 27;
figure 29 is a cross-section according to the line XXIX-XXIX shown in figure 28;
figure 30 shows a perspective view of a part of a container according to the invention;
figure 31 shows a perspective view of a part of a container according to the invention and of a gripper according to the invention to manipulate this container in a first position;
figures 32 and 33 show a perspective view of two other positions of the gripper in figure 31; and,
figure 34 shows a perspective view of another gripper according to the invention with which two 20-foot-containers according to the invention can be manipulated at the same time.

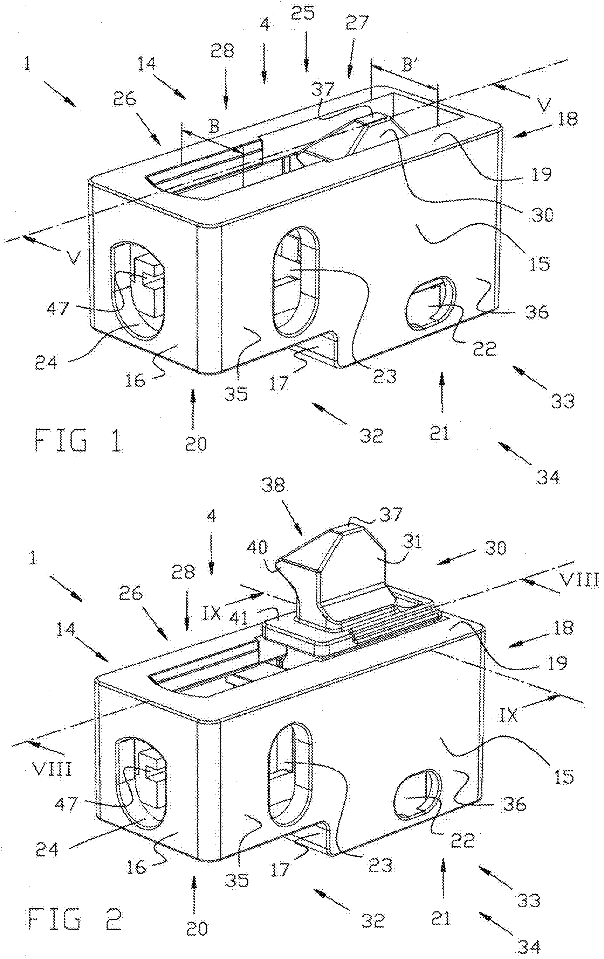

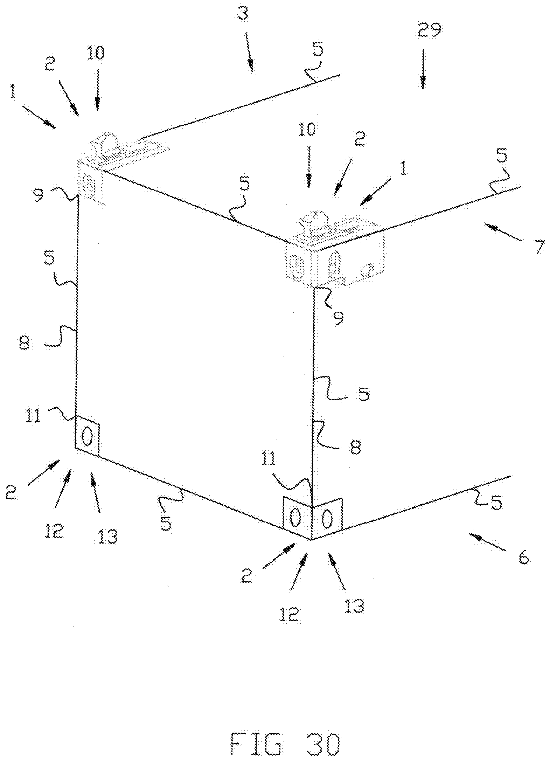

The improved corner piece 1 according to the invention, shown in figures 1 to 4, is intended to form a corner 2 of a container 3 according to the invention, a part of which is shown by way of example in figure 30.

The improved corner piece 1 is typically made of metal, it contains a hollow body 4 and it is meant to be applied between the ribs 5 of the container 3.

Such container 3 contains a bottom framework 6, a roof framework 7 and at least four corner posts 8, only two of which are shown in figure 30.

These corner posts 8 reach from the roof framework 7 to the bottom framework 6.

Each corner post 8 is provided on one of its ends 9 with a roof corner piece 10 that is part of the roof framework 7 and on the other end 11 with a bottom corner piece 12 that is part of the bottom framework 6.

In a container 3 according to the invention the four roof corner pieces 10 that are part of the roof framework 7 are improved corner pieces 1 of a type according to the invention, which type of corner pieces 1 will hereafter be discussed in detail.

Preferably the bottom corner pieces 12 are ISO-standardised corner pieces 13, in other words of a type as is currently generally used and that is formed by a beam-shaped hollow element the visible walls of which are provided with an opening.

This is also the case in the container 3 of figure 30.

The hollow body 4 of a corner piece 1 according to the invention shown in the figures is provided with walls, more specifically a pair of parallel side walls 14 and 15, two parallel front wall parts 16 and 17, a back wall 18, a top part 19 and two parallel bottom parts 20 and 21.

Obviously other embodiments of a corner piece 1 according to the invention are not excluded.

In the sidewall 15, which is meant to form an outer wall, there are two oval openings 22 and 23 and also the front wall 16 is provided with such an oval opening 24.

The top part 19 has an opening 25 which on the side of the front wall 16 has a narrowed part 26 with a width B and which on the side of the back wall has a widened part 27 with width B' .

Such corner piece 1 is intended to form a corner 2 of a container 3 and the intention hereby is that the container 3 can be manipulated using a gripper which grips in the corner pieces 1 of the container 3, e.g. to lift, to move or to connect the container 3 to other containers 3.

One or several openings 23, 24, 26 can serve hereby as a grip opening in to the extent that they have a form that can be gripped by external gripping means.

In this case the oval openings 23 and 24 can serve as grip opening, e.g. to manipulate a container 3 using a crane with a crane hook which can grip in an opening 23 and 24.

However, the embodiments of a corner piece 1 according to the invention shown in the figures are such that they are meant to cooperate with a gripper according to the invention which is provided with gripping means that can grip into a grip opening 28 which is provided in the top part 19 of the corner piece 1, or, which is the same, in the top part 29 of the container 3.

Such gripping means typically comprise at least a hammerlock with a rotatable oval end that can be inserted in a grip opening 28 of the top part 29 of the container 3.

As was already explained in the introduction, the known grippers are often exclusively formed by such gripping means in the form of a hammerlock with which a grip opening in the top part 29 of the container 3 can be gripped.

However, in addition to the aforementioned gripping means, a gripper according to the invention also contains other elements to manipulate a movable coupling element 30 in a corner piece 1 according to the invention.

Nevertheless, such a gripper according to the invention contains partially the same functionality, such that with such gripper containers 3 not provided with corner pieces 1 according to the invention can still be manipulated in the now known way.

Thus, the transition to the use of new corner pieces 1 according to the invention can be done gradually.

The opening 25, and in particular the narrowed part 26 of the opening 25, in the top part 19 of the corner piece 1 thus forms a grip opening 28 that can be gripped by a gripper according to the invention.

During the gripping, part of such external gripping means is inserted through the grip opening 28 into the hollow body 4 of the corner piece 1.

The grip opening 28, in the form of the narrowed part 26 of the opening 25, in the shown cases of the figures, has such a form that the corner piece 1 can be gripped by an external gripping means in the form of a hammerlock.

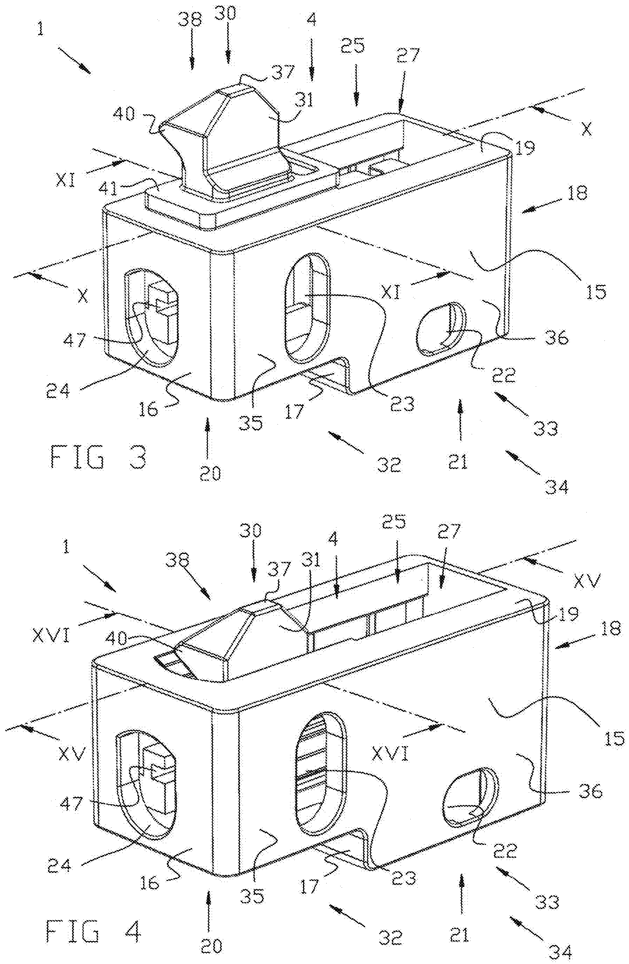

It is characteristic for an improved corner piece 1 according to the invention that such corner piece 1 contains a movable coupling element 30 that is at least movable between a fully retracted position, shown for example in figure 1, and a maximally protruding position, shown for example in figure 3.

In the maximally protruding position, a coupling part 31 of the coupling element 30 protrudes maximally, from the improved corner piece 1 on the level of the aforementioned grip opening 28.

In this maximally protruding position, coupling element 30 can, in other words, be used to couple an improved corner piece 1 of a container 3 to a bottom corner piece 13 of another container 3 that is applied with an opening adjacent to the protruding coupling element 30.

The coupling part 31 can for example typically be used for coupling to an ISO-standardised bottom corner piece 12 of a container 3 above.

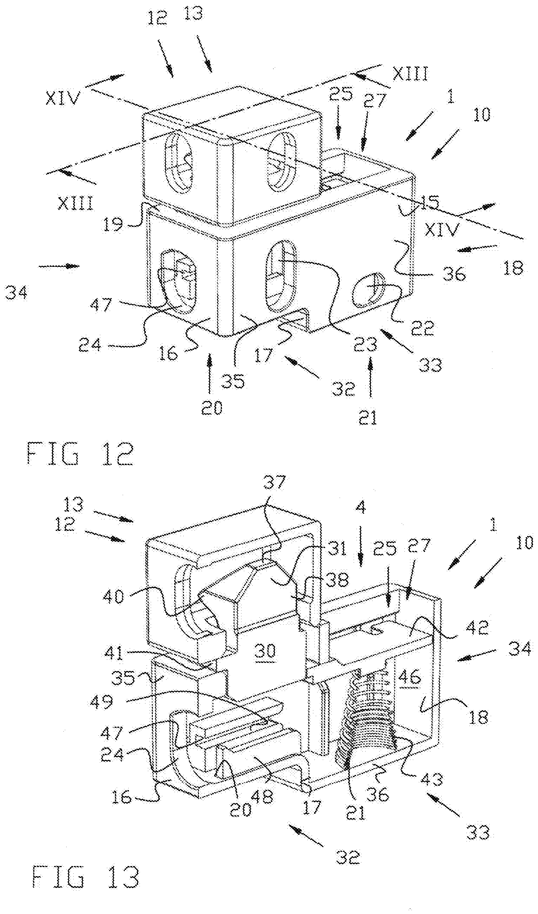

This is shown by way of illustration in figures 12 to 14.

In the fully retracted position the movable coupling element 30 is fully inside the improved corner piece 1.

The grip opening 28, more specifically the openings 23, 24 and the narrowed part 26 of the opening 25, as well as the part of the hollow body 4 adjacent to these grip openings 28 is hereby kept free in so far that the improved corner piece 1 is put in a position in which it can be gripped by the aforementioned external gripping means, whereby these gripping means penetrate into the hollow body 4 through such grip opening 28.

Containers 3 provided with roof corner pieces 10 that are executed as improved corner pieces 1 according to the invention and whereby the coupling element 30 is in the fully retracted position, can thus be stacked loosely on top of each other without being coupled to each other.

This is shown by way of example in figures 1, 6 and 7.

In the embodiments of the improved corner pieces 1 according to the invention shown in the figures, the movable coupling element 30 can also be put in a partially protruding position, for example as shown in figure 4 and the figures 16 and 17.

In the partially protruding position the coupling part 31 of the coupling element 30 only partially protrudes from the corner piece 1 on the level of the grip opening 28.

The intention is that the coupling part 31 in this position can be used as a guiding element, for example when placing containers 3 on top of each other below deck of a ship.

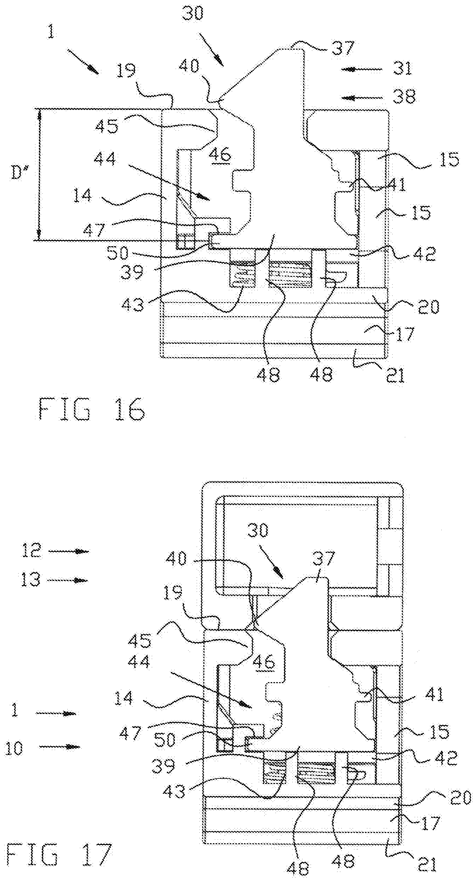

This is illustrated by way of example in figure 17.

In the first embodiment of an improved corner piece 1 shown in the figures 1 to 17 the coupling element 30 can also be put in an intermediate position, more specifically in a position between the maximally protruding position and the fully retracted position, whereby the coupling part 31 of the element 30 also protrudes fully from the corner piece 1, however is not on the level of the grip opening 28.

This intermediate position is illustrated in the figures 2, 8 and 9.

In this embodiment the coupling element 30 of the fully protruding position illustrated in figure 3 can be put in the partially protruding position illustrated in figure 4 via a partially retracted position on the level of opening 25.

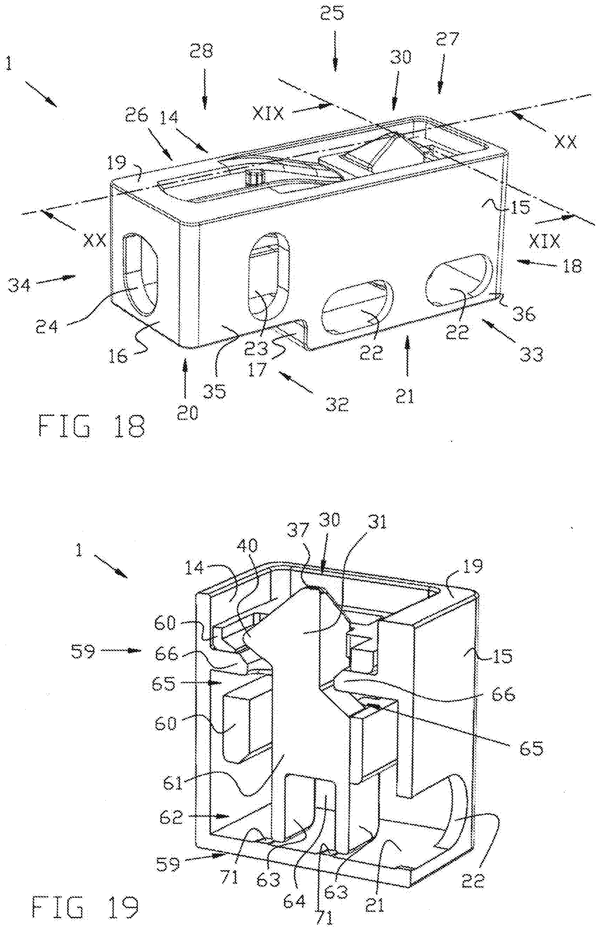

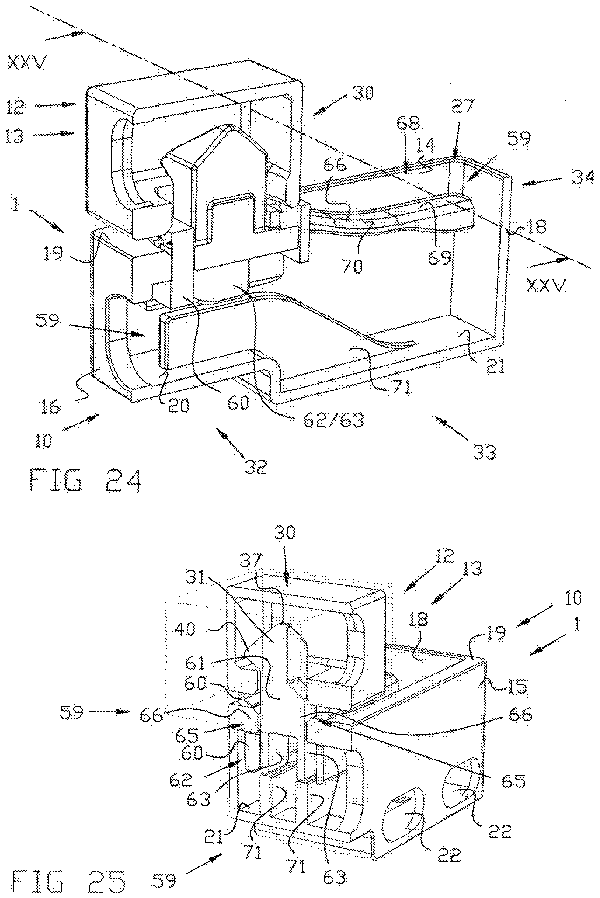

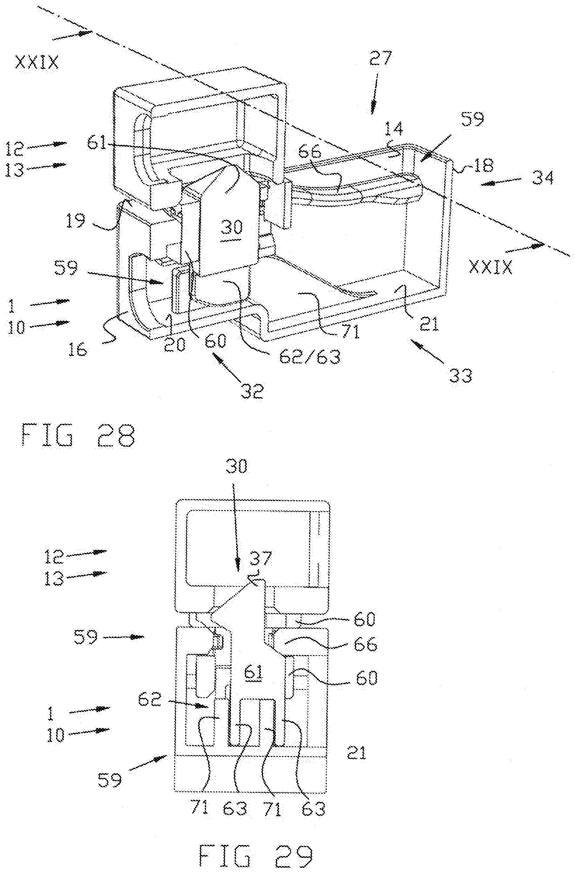

In the embodiment of an improved corner piece 1 according to the invention shown in the figures 18 to 29 there is no such intermediate position of the coupling element 30.
In this embodiment the coupling element 30 must always first be put in the fully retracted position, before the coupling element 30 can be put in the fully protruding position, or the partially protruding position.

To put the coupling element 30 in the different positions and to guarantee the required functionality, the corner piece 1 first and foremost contains a first corner piece part 32 the exterior dimensions and form of which correspond with an ISO-standardised corner piece 13 with the exception of the grip opening 28 which is also part of this corner piece part 32.

When the coupling element 30 is put in the fully retracted position, this first corner piece part 32 in principle according to the invention has the same functionality as a known ISO-standardised corner piece 13, again with the intention to easily and gradually introduce the proposed measures presented in this invention in the current existing containers.

Furthermore, the improved corner piece 1 contains an adjoining corner piece part 33 that is adjacent to the first corner piece part 32 and in which the coupling element 30 is stored in the fully retracted position.

It is clear that such adjoining corner piece part 33 is necessary to store the coupling element 30, such that the first corner piece part 32 is kept free in this situation and the corner piece 1 can be gripped there with a gripper according to the invention via the grip openings 28, either the grip opening 28 formed by the narrowed part 26 of the opening 25 or the grip openings 28 formed by the openings 23 and 24.

In the embodiments shown in the figures this is realised by making the hollow body 4 as an L-shaped structure 34 with a first beam-shaped wall part 35 that forms the first corner piece part 32 and a second beam-shaped wall part 36 that forms the adjoining corner piece part 33.

Naturally, other forms of the invention are not excluded.

The first beam-shaped wall part 35 contains the front wall part 16 and the bottom part 20, as well as the front part of the side walls 14 and 15 and the top part 19.

The second beam-shaped part 36 contains the back wall 18 and the bottom part 21, as well as the back part of the side walls 14 and 15 and the top part 19.

Thus, the improved corner piece 1 is provided with a top part 19 that is part of both the first corner piece part 32 and of the second corner piece part 33.

In this top part 19 an opening 25 is provided, part 26 of which serves as grip opening 28.

Opposite the top part 19 in the first corner piece part 32 a first, flat closed bottom part 20 is provided and in the second corner piece part 33 a second flat closed bottom part 21.

The first bottom part 20 hereby protrudes at a distance D from the top part 19.

This distance D, reduced with the thickness T of the top part 19, is somewhat greater than the difference in height D' between the top 37 of the coupling element 30 in the maximally protruding position and the top 37 of the coupling element 30 in the partially protruding position,
The second bottom part 21 protrudes at a distance E from the top part 19 that is somewhat greater than the height H of the movable coupling element 30.

In the first embodiment of an improved corner piece 1 according to the invention, shown in the figures 1 to 17, the top 37 of the coupling element 30 is formed by a coupling part 31 that forms a protrusion 38 on a base 39 of the coupling element 30.

The coupling part 31 is hereby provided with a laterally extending bulge 40 that forms a kind of nose 40.

Furthermore, between the base 39 and the coupling part 38, a widened edge 41 is provided, the width B" of which is greater than the width B of the grip opening 28 formed by the narrowed part 26 of the opening 25.

In this way the widened edge 41 of the coupling element 30 can rest on the top part 19 of the corner piece 1 around the grip opening 28, more specifically on the level of the narrowed part 26 of the opening 25.

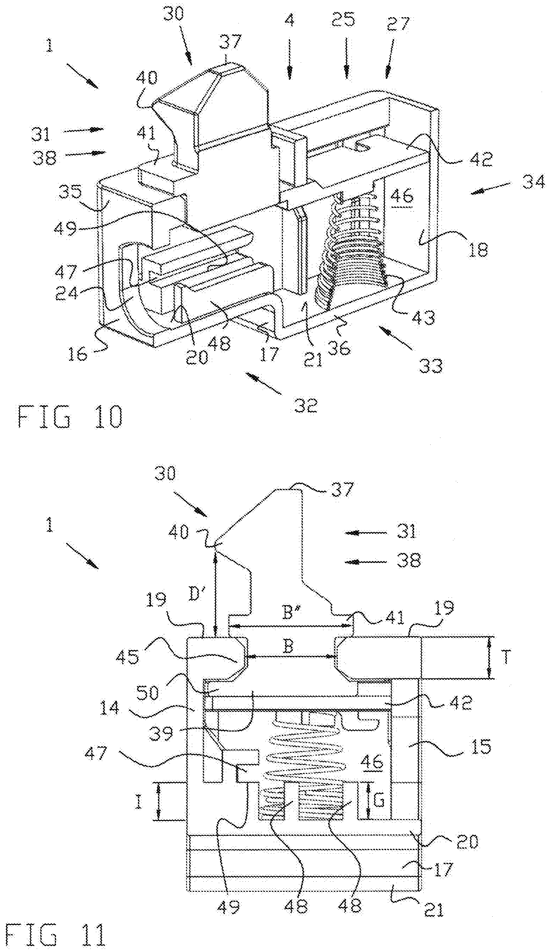

This is illustrated in more detail for example in the cross-section of figure 11.

Furthermore, the width B" of the widened edge 41 is slightly narrower than the width B' of the widened part 27 of the opening 25, such that the widened edge 41 of the coupling part 38 can be inserted through this widened part 27 of the opening 25.

The base 39 has a width F that is clearly greater than the width B' of the opening 25 on the level of the widened part 27, such that the coupling element 30 is kept within the contours of the hollow body 4 due to the form of the base 39.

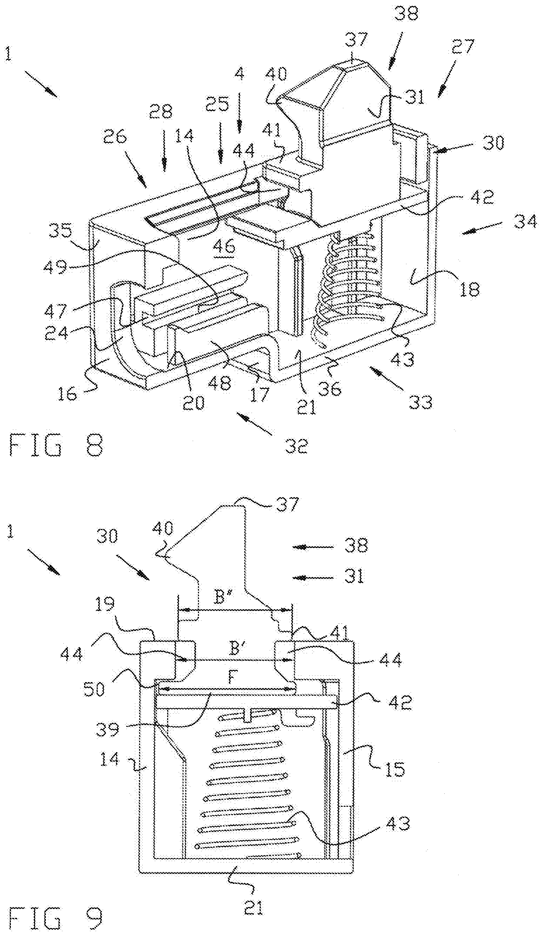

This is all illustrated in more detail in the cross-section of figure 9.

Furthermore, in the first embodiment of an improved corner piece 1 according to the invention discussed here, the adjoining corner piece part 33 is provided with a spring platform 42 that is supported by a spring element 43 and that can move up and down in this adjoining corner piece part 33.

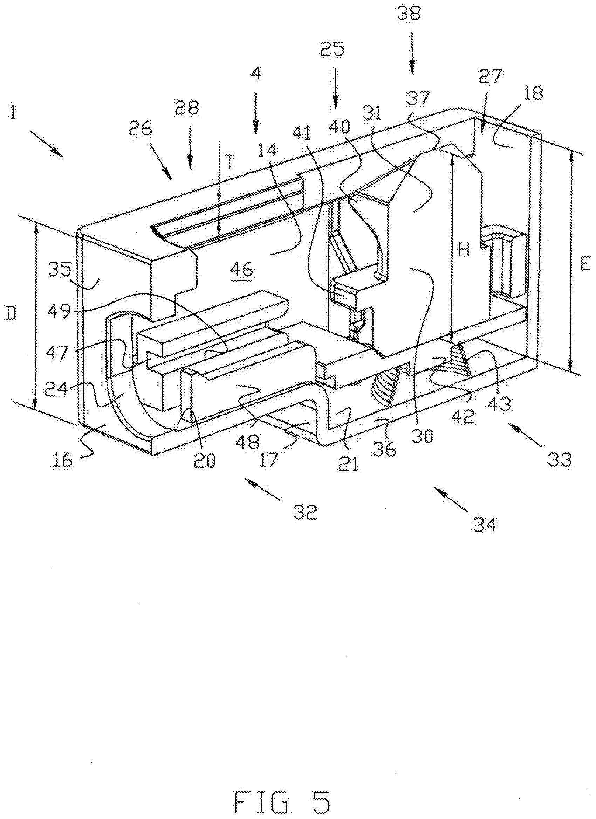

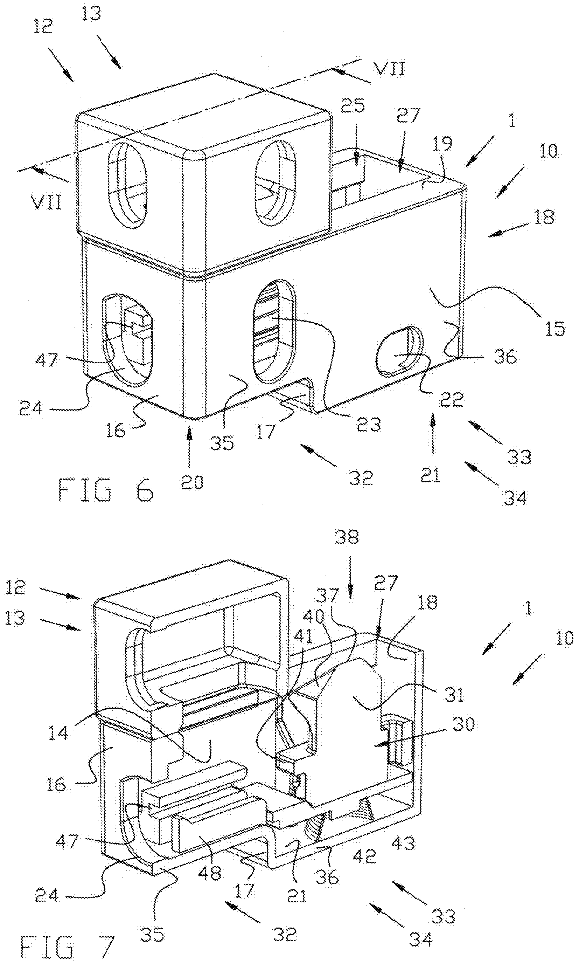

In the fully retracted position the coupling element 30 rests on this platform 42 and the spring element 43 is in a compressed position, which is clearly shown in the figures 5 and 7.

Another characteristic of this first embodiment of an improved corner piece 1 according to the invention consists in that the coupling element 30 on both sides is provided with a longitudinal groove 44, which is practically complementary to the side edges 45 of the grip opening 28, more specifically on the level of the narrowed part 26 of the opening 25.

Figures 9 and 11 show this again in more detail.

To put the coupling element 30 from the fully retracted position, shown in figures 1 and 5 to 7, to the maximally protruding position, shown in the figures 3 and 10 to 14, the coupling element 30 is first moved upward by the spring element 43 in the adjoining corner piece part 33 until the base 39 is resting against the top part 19 of the corner piece on the inside 46 of the hollow body 4.

The spring element 43 is not compressed hereby.

Thus, the coupling element 30 is put in the position, illustrated further in the figures 2, 8 and 9.

Afterwards, the coupling element 30 is slid over the platform 42 from the adjoining corner piece part 33 to the first corner piece part 32.

This is done in such a way that the side edges 45 of the grip opening 28 are slid in the longitudinal grooves 44 on both sides, such that the coupling part 38 protrudes maximally from the corner piece 1, whereas the coupling element 30 is solidly inserted in the narrowed part 26 of the opening 25.

Obviously in the event of a reverse movement the coupling element 30 can be put from the maximally protruding position back into the fully retracted position.

In the first embodiment of an improved corner piece 1 according to the invention a groove 47 is provided on at least one side wall 14 on the inside 45 of the hollow body 4 on the level of the first corner piece part 32.

Moreover, in this case a number of vertical supports 48 are provided laterally along the groove 47 and parallel to the side walls 14 and 15 the height G of which corresponds with the height I on the level of the bottom 49 of the groove 47.

To put the coupling element 30 from the fully retracted position, shown in the figures 1 and 5 to 7, to the partially protruding position, shown in the figures 4 and 15 to 17, the coupling element 30 needs to be slid laterally over the platform 42 from the adjoining corner piece part 33 to the first corner piece part 32.

A relative side edge 50 of the base 39 of the coupling element 30 in the groove 47 is hereby slid in the first corner piece part 32, while the base 39 rests on the vertical supports 48.

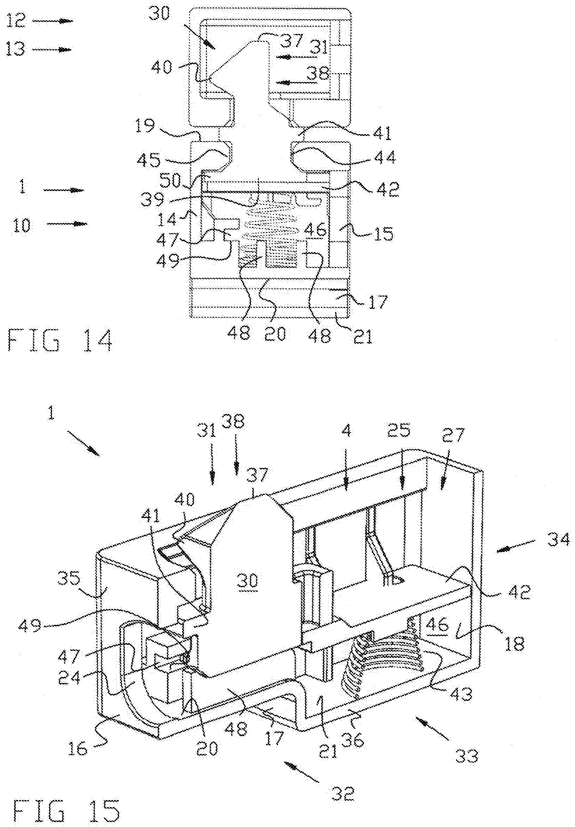

This is clearly shown for example in the figures 15 and 16.

The coupling element 30 can be put from the partially protruding position back in the fully retracted position by first moving the platform 42 downward until the level of I or G corresponding to the partially protruding position, while the spring element 43 is compressed and by then sliding the coupling element 30 from the first corner piece part 32 onto the platform 42.

The invention also relates to a grip mechanism 51 that can cooperate with an improved corner piece 1 according to the invention.

Such grip mechanism 51 is meant to be able to move the aforementioned movable coupling element 30 in such an improved corner piece 1 according to the invention to the desired positions.

The invention also relates to a gripper 52 to manipulate a container 3 according to the invention.

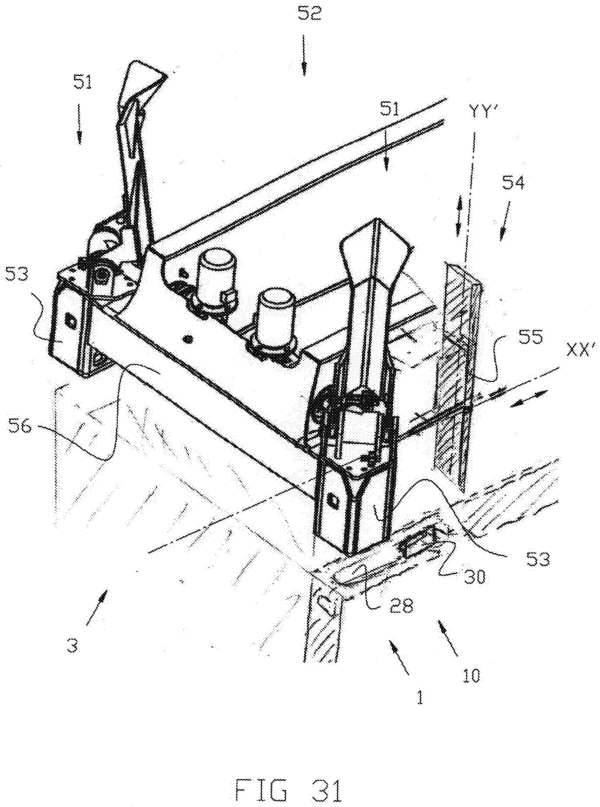

The figures 31 to 33 partially show a first embodiment of such a gripper 52 according to the invention.

In this first embodiment, the gripper 52 is provided with four grip mechanisms 51 according to the invention, only two of which are shown, whereby each grip mechanism 51 is able to cooperate with a corresponding roof corner piece 10 of a container 3 according to the invention.

Characteristic of a grip mechanism 51 according to the invention is that the grip mechanism 51 at least has gripping means 53 which can be inserted via the grip opening 28 in the hollow body 4 of the relative improved corner piece 1 according to the invention to grip the improved corner piece 1 and is provided with means 54 to move the movable coupling element 30 to the maximally protruding position, the fully retracted position and as the case may be to a partially protruding position or another position, such as the aforesaid intermediate position.

The gripping means 53 comprise at least a hammerlock with a rotatable oval end that can be inserted in the grip opening 28.

In the figures 31 to 33 the means 54 are shown very schematically, but only for the most forward shown grip mechanism 51 according to the invention.

The means 54 contain a protrusion 55 that can move up and down according to the vertical direction YY' in relation to the skeleton 56 of the gripper 52 and that also can move to and fro in the horizontal direction XX' in relation to the skeleton 56 of the gripper 52.

In order to be able to steer these movements of the protrusion 55 in the directions XX' and YY' and/or have them occur automatically, the grip mechanism 51 is preferably provided with control means adapted to this end and drive means not discussed in detail here and not shown in the figures.

Figures 31 to 33 show consecutive positions of this protrusion 55 when setting the coupling element 30 of a corner piece 1 from a fully retracted position to a maximally protruding position.

In figure 31 the coupling element 30 is in the intermediate position, according to the position shown in figure 2.

Under pressure of the spring element 43, the coupling element 30 automatically takes this position, when a container 3 above is removed.

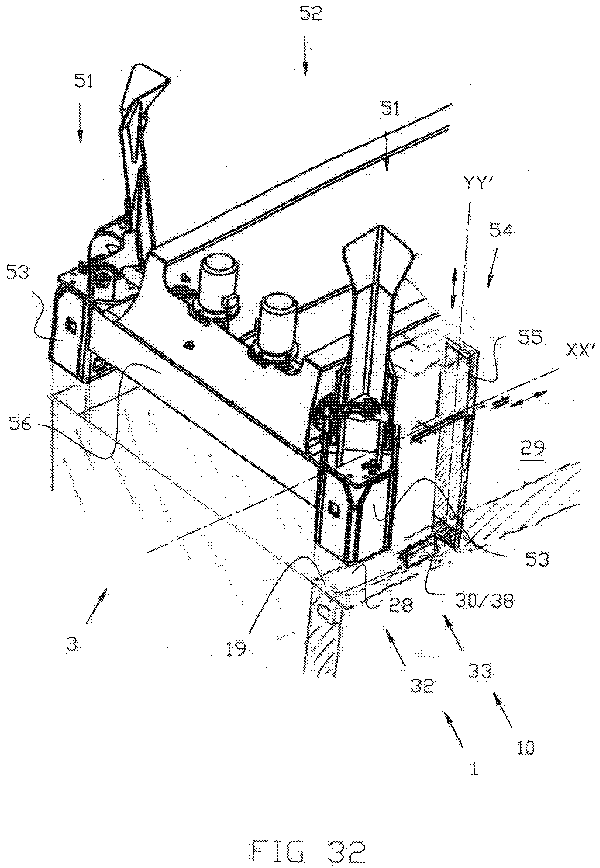

In figure 31 the protrusion 55 is in a maximal vertical position, while the protrusion 55 in figure 32 is moved downward from the aforementioned maximal vertical position to against the top part 29 of the container 3 and the top part 19 of the improved corner piece 1 in question.

In the position of figure 32, the protrusion 55 is just behind the coupling element 30, more specifically behind the coupling part 38 thereof that protrudes from the adjoining corner piece part 33.

By moving the protrusion 55 forward into the horizontal direction XX' the coupling element 30 is moved to the first corner piece part 32, such that it is in the maximally protruding position.

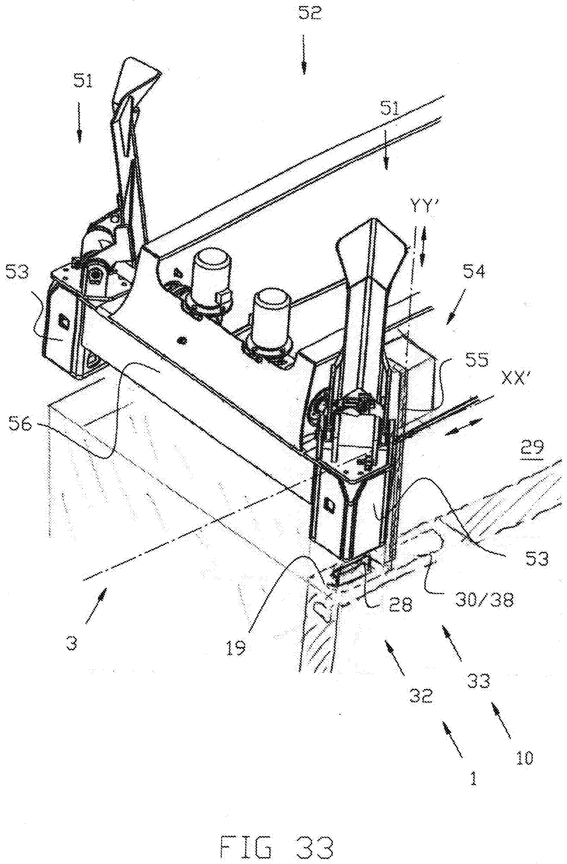

This is shown in figure 33.

Thus, it is clear that the coupling element 30 can very easily be put in the different positions by an external grip mechanism 51 that is part of a gripper 52 positioning the protrusion 55.

The followed order of the consecutive positionings in which the protrusion 55 is put is of course adapted depending on the nature of the movement the coupling element 30 in the corner piece 1 needs to undergo.

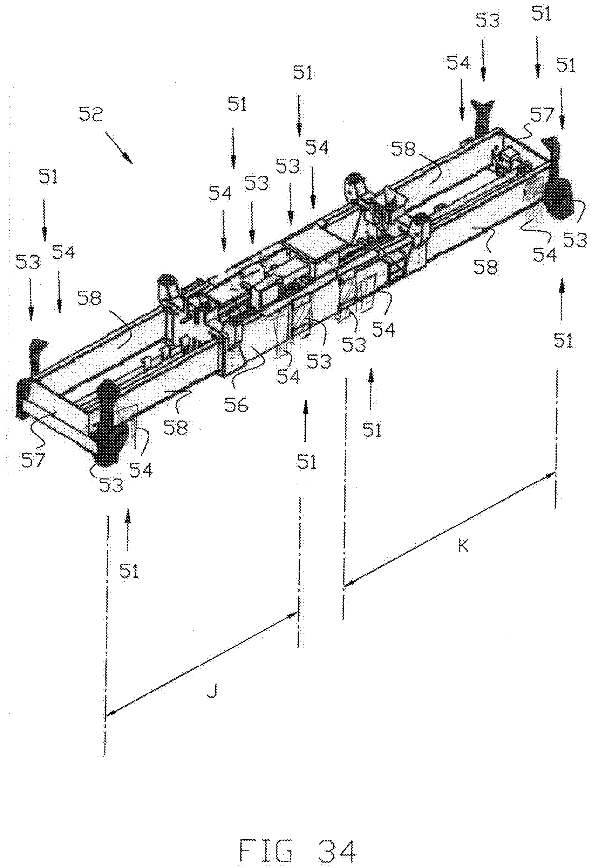

Figure 34 shows yet another embodiment of a gripper 52 according to the invention, more specifically a twin-lift gripper 52.

This gripper 52 is provided with eight grip mechanisms 51 that are set up according to the corner stones of two adjoining rectangles, such that with the gripper 52 two adjacent 20-foot containers 3 can be manipulated at the same time.

Every grip mechanism 51 is again provided with gripping means 53 and means 54 to move a coupling element 30 and every grip mechanism 51 can again cooperate with a corresponding roof corner piece 10 of one of the containers 3, for example to move the coupling elements 30 in question to a certain position and/or to simultaneously lift or move the containers 3.

In the example shown, the grip mechanism pairs 51 of the gripper 52 on the extreme, opposite ends 57 of the gripper 52 are also provided on arms 58 that have been applied slidably in the skeleton 56 of the gripper 52, with the intention of being able to adapt the distances J and K between the grip mechanisms 51 as a function of the dimensions of the roof framework 7 of the containers 3.

It is obvious that to grip a container 3 or to stack uncoupled containers 3 on top of each other, the coupling elements 30 of their roof corner pieces 10 need to be put in the fully retracted position or possibly in the partially protruding position if a certain guidance is desired when stacking containers 3.

For the coupled stacking of containers 3 the coupling elements 30 of their roof corner pieces 10 need to be put in the maximally protruding position
To form a bottom framework 6 of the container 3, the containers 3 according to the invention preferably have four bottom corner pieces 12 which are each provided with an opening.

On the level of the four bottom corner pieces 12, the bottom framework 6 is hereby complementary to the four coupling parts 31 of the four roof corner pieces 10 of the container 3, that is in so far that they were put in the maximally protruding position.

This should allow several such containers 3 to be stacked on top of one another in a fitting manner, while they are coupled to each other.

The coupling elements 30 of the roof corner pieces 10 in the maximally protruding position and the openings in bottom corner pieces 12, which are for example ISO-standardised bottom corner pieces 13, are according to the invention aligned to each other in such a way that identical containers 3 can be stacked on top of each other and coupled to each other and can be uncoupled again by carrying out a combined movement with a gripper 52 with one of the containers 3 consisting of an up or down movement and a rotation movement.

To this end, according to the invention, the improved corner pieces 1 which form the roof corner pieces 10 of such container 3 are oriented in relation to each other such that the lateral bulges or noses 40 on the coupling elements 30 of the roof corner pieces 1 on a first short end of the container 3 are both oriented in a first given direction, while the lateral bulges or noses 40 on the coupling elements 30 of the roof corner pieces 10 on the opposite short end of the container 3 are both oriented in an opposite direction. In this way containers 3 can be stacked and coupled by carrying out the aforementioned combined movement with a gripper 52 and this without any manual intervention.

This set up method whereby the noses 40 of the coupling elements 30 are oriented in the opposite direction, is already common place in fully automatic "stacking cones" and fully automatic intermediary twist locks.

Figures 18 to 29 show a second embodiment of an improved corner piece 1 according to the invention.

The external form of this improved corner piece 1 is more or less the same as the embodiment discussed above, as the improved corner piece 1 chiefly forms a hollow body 4 that also has an L-shaped structure 34 with a first beam-shaped wall part 35 and an adjoining beam-shaped wall part 36.

Indeed, the first beam-shaped wall part 35 and the adjoining beam-shaped wall part 36 have the same function as in the previously discussed embodiment system, more specifically to house a movable coupling element 30 in the different positions.

Oval openings have also been provided in the side wall 15 as well as in the front wall part 16.

However, this time there are two oval openings 22 in the adjoining wall part 36, or one more than in the previous case.

In the top part 19 as well, an opening 25 has been provided with a narrowed part 26 and a widened part 27, whereby the narrowed part 26 can serve as the grip opening 28, e.g. to grip the corner piece with a grip mechanism 51 provided with a hammerlock.

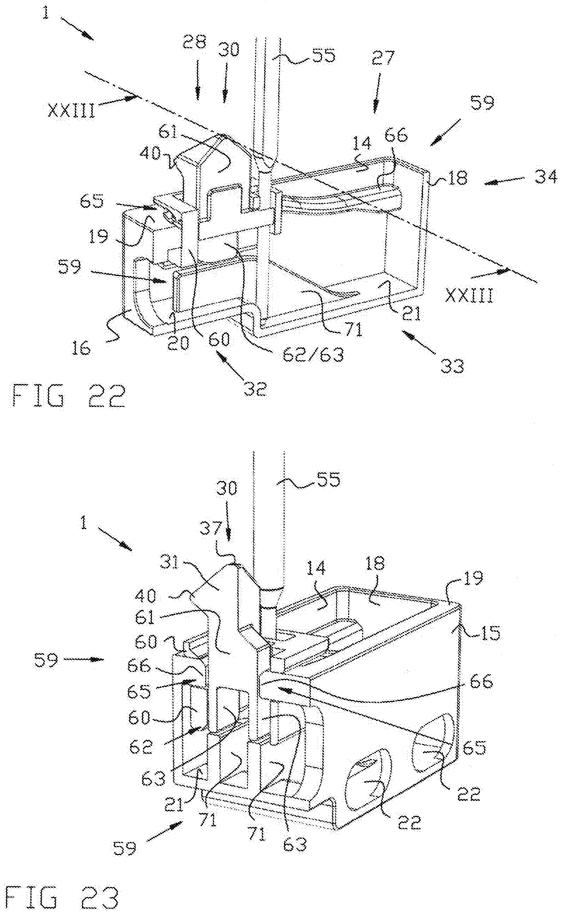

Specific for this embodiment is the characteristic that in the hollow body 4 of the improved corner piece 1 a guiding element 59 is provided over which the coupling element 30 can slide between the fully retracted position, shown in figures 18 to 21, and the maximally protruding position, shown in figures 22 to 25.

Furthermore, in the example shown, this coupling element 30 contains two parts, more specifically an external part 60 and an internal part 61 that is surrounded by the external part 60.

The internal part 61 can be moved up and down in the external part 60.

The internal part 61 hereby forms a coupling part 31 which at its top 37 is provided with a laterally extending bulge or nose 40.

The foot 62 of the internal part 61 is formed by two legs 63 which are each made up of a flat part and which are at a certain distance from each other in order to leave an intermediate space 64.

The external part 60 of the coupling element 30 is provided with a lateral groove on both sides 65.

The guiding element 59 contains a pair of opposite edges 66 that, on the side walls 14 and 15 on the inside 46 in the hollow body 4 are provided with the improved corner piece 1 on both sides.

On both ends 67 and 68, every such edge 66 is provided with a straight piece 69.

Furthermore, the edges 66 in the intermediate part 70 follow a smooth curve.

The opposite edges 66 extend into a corresponding groove 65 of the external part 60 of the coupling element 30.

Furthermore, the guiding element 59 contains a pair of profiled upright parallel partitions 71 provided on the bottom parts 20 and 21 of the hollow body 4.

The legs 63 of the internal part 61 of the coupling element 30 can slide over these partitions 71 during a movement of the coupling element 30 between the maximally protruding position and the fully retracted position.

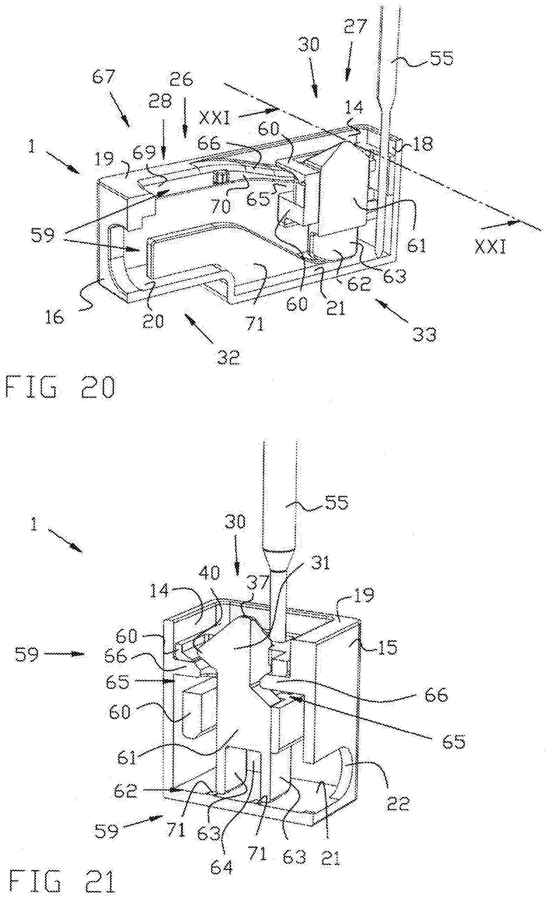

As is shown for example in figures 20 and 22, the coupling element 30 can be put from the fully retracted position to the maximally protruding position by sliding the external part 60 of the coupling element 30 over the opposite edges 66 and the legs 63 of the internal part 61 of the coupling element 30 over the profiled upright partitions 71 of the guiding element 59, such that the coupling element 30 goes from the adjoining corner piece part 33 to the first corner piece part 32 and the coupling part 31 protrudes from the corner piece 1 on the level of the grip opening 28.

For example, the coupling element 30 can hereby be moved forward by a protrusion 55 on a gripper 52 or grip mechanism 51 according to the invention.

This protrusion 55 is hereby for example put against the coupling element 30 by a vertical positioning in a YY' direction to then move the coupling element 30 by repositioning the protrusion 55 in a horizontal direction XX', as was already illustrated earlier in the figures 31 to 34.

By a reverse movement the coupling element 30 can of course be moved back from the maximally protruding position into the fully retracted position.

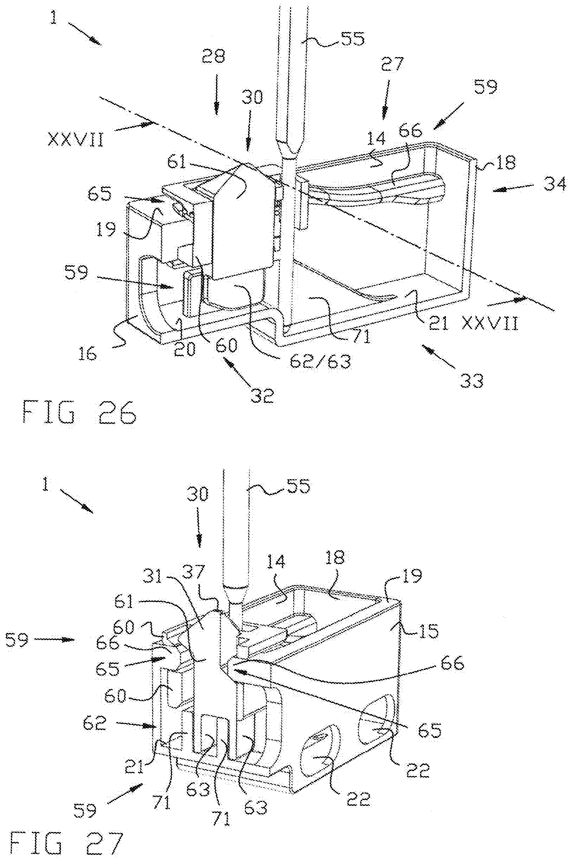

In an improved corner piece 1 according to the invention in this second embodiment, the coupling element 30 can also be put in a partially protruding position, as is shown in the figures 26 to 29.

The coupling element 30 is hereby put from the maximally protruding position into the partially protruding position by first putting the coupling element 30 back in the fully retracted position and then moving it laterally such that the legs 63 of the internal part 61 of the coupling element 30 are no longer aligned with the profiled upright partitions 71 of the guiding element 59.

Subsequently, the coupling element 30 is put back from the adjoining corner piece part 33 to the first corner piece part 32 and thus the envisaged partially protruding position of the coupling element 30 is obtained.

The coupling element 30 can of course be put back from the partially protruding position to the maximally protruding position by a reverse movement.

The present invention is by no means limited to the embodiments, described by way of an example, of a corner piece 1, a container 3, a grip mechanism 51 and a gripper 52 according to the invention, but such improved corner pieces 1, containers 3, grip mechanisms 51 and grippers 52 can be realised in all kinds of forms and dimensions without departing from the scope of the invention, as defined by the appended claims.

## Claims

1. Corner piece (1) to form a corner (2) of a container (3), whereby the corner piece (1) contains a hollow body (4) that is meant to be applied between the ribs (5) of the container (3), whereby the hollow body (4) is provided with a wall (19) in which at least one grip opening (28) is applied with a form that can be gripped by external gripping means (51,52), whereby during the gripping a part of such external gripping means can be inserted through the grip opening (28) into the hollow body (4), whereby the corner piece (1) contains a movable coupling element (30) which can at least move between a maximally protruding position, whereby a coupling part (31) of the coupling element (30) protrudes maximally out of the corner piece (1) on the level of the aforementioned grip opening (28), such that it can serve as a coupling element (30) for coupling to a corner piece (1) of another container (3) which is placed with an opening adjoining against the protruding coupling element (30), and, a fully retracted position, in which the movable coupling element (30) is completely inside the corner piece (1)and the grip opening (28) as well as the part of the hollow body (4) adjoining this grip opening (28) is left free in so far that the corner piece (1) is put in a position in which it can be gripped by the aforementioned external gripping means (51,52) **characterised in that** the movable coupling element (30) can also be put in a partially protruding position, whereby the coupling part (31) of the coupling element (30) only partially extends from the corner piece (1) on the level of the grip opening (28) and thus can serve as guiding element.

2. Corner piece (1) according to claim 1, **characterised in that** the aforementioned at least one grip opening (28) has such a form that the corner piece (1) can be gripped by an external gripping means (51,52) in the form of a hammerlock.

3. Corner piece (1) according to one or several of the previous claims, **characterised in that** the corner piece (1) contains a first corner piece part (32) the external dimensions and form of which correspond with an ISO-standardised corner piece (13) with the exception of the at least one grip opening (28) which is however also part of this corner piece part (32), as well as an adjacent corner piece part (33) that is adjoining and connecting to the first corner piece part (32) and in which the movable coupling element (30) is kept in the fully retracted position.

4. Corner piece (1) according to claim 3, **characterised in that** the hollow body (4) is an L-shaped structure (34) with a first beam-shaped wall part (35) that forms the first corner piece part (32) and a second beam-shaped wall part (36) that forms the adjacent corner piece part (33).

5. Corner piece (1) according to claims 3 and 4, **characterised in that** the corner piece (1) is provided with a top part(19) that is part of both the first corner piece part (32) and the second corner piece part (33) and in which an opening (25) is provided a part of which (26) serves as grip opening (28), and whereby opposite the top part (19) in the first corner piece part (32) a first flat closed bottom part (20) is provided and in the second corner piece part (33) a second flat closed bottom part (21) is provided and whereby the first bottom part (20) protrudes at a distance (D) from the top part (19), whereby this distance (D), reduced with the thickness (T) of the top part(19), is somewhat greater than the difference in height (D') between the top (37) of the coupling element (30) in the maximally protruding position and the top (37) of the coupling element (30) in the partially protruding position, and whereby the second bottom part (21) protrudes at a distance (E) from the top part (19) that is somewhat greater than the height (H) of the movable coupling element (30).

6. Corner piece (1) according to one or several of the previous claims, **characterised in that** the top (37) of the coupling element (30) is formed by a coupling part (31) that forms a protrusion (38) on a base (39) of the coupling element (30), whereby the coupling part (31) is provided with a laterally extending bulge (40), whereby between the base (39) and the coupling part (31) a widened edge (41) is provided the width (B") of which is greater than the width (B) of the grip opening (28), such that the widened edge (41) can rest on the top part (19) around the grip opening (28).

7. Corner piece (1) according to one or several of the claims 3 to 6, **characterised in that** the adjoining corner piece part (33) is provided with a spring platform (42) that is supported by a spring element (43), whereby in the fully retracted position the coupling element (30) is supported on the platform (42) and the spring element (43) is in a compressed position.

8. Corner piece (1) according to claim 7, **characterised in that** the coupling element (30) on both sides is provided with a longitudinal groove (44), whereby the coupling element (30) is put from the fully retracted position to the maximally protruding position by first moving the coupling element (30) upwards in the adjoining corner piece part (33), while the spring element (43) is relaxed, and by then moving the coupling element (30) over the platform (42) from the adjoining corner piece part (33) to the first corner piece part (32) and in such a way that the side edges (45) of the grip opening (28) are slid in the longitudinal grooves (44) on both sides and whereby by a reverse movement the coupling element (30) is put back from the maximally protruding position in the fully retracted position.

9. Corner piece (1) according to claims 1 and 8, **characterised in that** the coupling element (30) from the fully retracted position is put in the partially protruding position by first moving the coupling element (30) partially upward and then sliding it laterally over the platform (42) from the adjoining corner piece part (33) to the first corner piece part (32) and in such a way that at least one side edge (50) of the base (39) of the coupling element (30) is slid in a groove (47) that is provided on the inside (46) of the hollow body (4) to a side wall (14) on the level of the first corner piece part (32) and whereby the coupling element (30) from the partially protruding position is put back in the fully retracted position by possibly first moving the platform (42) downward, while the spring element (43) is compressed, then moving the coupling element (30) from the first corner piece part (32) onto the platform (42)and finally moving the platform (42) further downward.

10. Corner piece (1) according to one or several of the claims 3 to 6, **characterised in that** in the hollow body (4) of the corner piece (1) a guiding element (59) is provided over which the coupling element (30) can slide between the fully retracted position and the maximally protruding position.

11. Corner piece (1) according to claim 10, **characterised in that** the coupling element (30) contains two parts, more specifically an external part (60) and an internal part (61) that is surrounded by the external part (60) and that can move up and down in the external part (60), whereby the internal part (61) forms a coupling part (31) which at its top (37) is provided with a laterally extending bulge (40), whereby the foot (62) of the internal part (61) is formed by two legs (63) which each consist of a flat part and which are at a certain distance from each other in order to leave an intermediate space (64).

12. Corner piece (1) according to claims 10 or 11, **characterised in that** the external part (60) of the coupling element (30) is provided with a lateral groove on both sides (65) and that the guiding element (59) contains a pair of opposite edges (66) which are provided on the side walls (14,15) in the hollow body (4) on either side of the corner piece (1) and which each are provided with a straight piece (69) on both ends (67,68) and whereby the edges (66) in the intermediate part (70) follow a smooth curve, whereby the opposite edges (66) extend into a corresponding groove (65) of the external part (60) and whereby the guiding element (59) moreover contains a pair of profiled upright partitions (71) provided on the bottom parts (20,21) of the hollow body (4) and over which the legs (63) of the internal part (60) of the coupling element (30) can slide.

13. Corner piece (1) according to one or several of the claims 10 to 12, **characterised in that** the coupling element (30) from the fully retracted position is put in the maximally protruding position by making the coupling element (30) slide over the opposite edges (66) and over the profiled upright partitions (71) of the guiding element (59) from the adjoining corner piece part (33) to the first corner piece part (32) and whereby by a reverse movement the coupling element (30) is put back from the maximally protruding position in the fully retracted position.

14. Corner piece (1) according to claims 11 and 12, **characterised in that** the coupling element (30) is put from the maximally protruding position to the partially protruding position by first putting the coupling element (30) back in the fully retracted position and then moving the coupling element (30) laterally such that the legs (63) of the internal part (61) of the coupling element (30) are no longer aligned with the profiled upright partitions (71) of the guiding element (59) and by then moving the coupling element (30) from the adjoining corner piece part (33) to the first corner piece part (32) and whereby the coupling element (30) is put from the partially protruding position back in the maximally protruding position by a reverse movement.

15. Container (3) comprising at least a bottom framework (6), a roof framework (7) and at least four corner posts (8), which corner posts (8) reach from the roof framework (7) to the bottom framework (6), and whereby each corner post (8) on one of its ends (9) is provided with a roof corner piece (10) that is part of the roof framework (7), and on the other end (11) with a bottom corner piece (12) that is part of the bottom framework (6), **characterised in that** the four roof corner pieces (10) that are part of the roof framework (7) are corner pieces (1) of a type according to any one of the previous claims.

16. Container (3) according to claim 15 provided with roof corner pieces (10) according to claim 6, **characterised in that** the lateral bulges (40) on the coupling elements (30) of the roof corner pieces (10) on a first short end of the container (3) are both oriented in a first given direction and the lateral bulges (40) on the coupling elements (30) of the roof corner pieces (10) on the opposite short end of the container (3) are both oriented in an opposite direction.

17. Container (3) according to claim 15 or 16, **characterised in that** the four bottom corner pieces (12) are each provided with an opening to form a bottom framework (6) of the container (3) that on the level of the four bottom corner pieces (12) is complementary to the four coupling parts (31) of the four roof corner pieces (10) of the container (3), at least in so far they were put in the maximally protruding position, and in such a way that several such containers (3) of the same type can be stacked on top of one another in a fitting manner.

18. Container (3) according to claim 17, **characterised in that** the four bottom corner pieces (12) are ISO-standardised corner pieces (13).

19. Container (3) according to claims 16 and 18, **characterised in that** the coupling elements (30) of the roof corner pieces (10) in the maximally protruding position and the openings in the ISO-standardised bottom corner pieces (12) are aligned to each other, such that identical such containers (3) can be stacked on each other and can be coupled to each other and detached again by carrying out a combined movement with one of the containers (3) consisting of an up or down movement and a rotation movement, without any manual intervention.

20. Grip mechanism (51) that can cooperate with a corner piece (1) according to one or several of the claims 1 to 14, **characterised in that** the grip mechanism (51) at least has:
- gripping means (53) which can be inserted via the grip opening (28) in the hollow body (4) of the improved corner piece (1) to grip the corner piece (1); and,
- means (54) to move or activate the movement of the movable coupling element (30) to the maximally protruding position, the fully retracted position and as the case may be to one or several partially protruding positions.

21. Gripping mechanism (51) according to claim 20, **characterised in that** the gripping means (53) comprise at least a hammerlock with a rotatable oval end that can be inserted in the grip opening (28).

22. Gripper (52) to manipulate a container (3) according to one or several of the claims 15 to 19, **characterised in that** the gripper (52) is provided with four grip mechanisms (51) according to claim 20 or 21, whereby each grip mechanism (51) can cooperate with a corresponding roof corner piece (10) of the container (3) .

23. Gripper (52) according to claim 22, **characterised in that** the gripper (52) is provided with eight grip mechanisms (51) according to claim 20 or 21, which are set up such that with the gripper (52) two 20-foot containers (3) can be simultaneously manipulated, whereby each grip mechanism (51) can cooperate with a corresponding roof corner piece (10) of one of the containers (3), for example to move the coupling elements in question to a certain position and/or to simultaneously lift or move the containers.

24. Gripper (52) according to claim 22 or 23, **characterised in that** the grip mechanisms (51) are provided on arms (58) of the gripper which have been provided slidable in the gripper (52) in order to be able to adapt the distances (J, K) between the grip mechanisms (51) as a function of the dimensions of the roof framework (7) of the container (3).

## Patentansprüche

1. Eckstück (1) zum Bilden einer Ecke (2) eines Behälters (3), wobei das Eckstück (1) einen Hohlkörper (4) enthält, der dazu bestimmt ist, zwischen den Rippen (5) des Behälters (3) angebracht zu werden, wobei der Hohlkörper (4) mit einer Wand (19) versehen ist, in der mindestens eine Greiföffnung (28) mit einer Form angebracht ist, die durch äußere Greifmittel (51, 52) gegriffen werden kann, wobei während des Greifens ein Teil eines solchen äußeren Greifmittels durch die Greiföffnung (28) in den Hohlkörper (4) einführbar ist, wobei das Eckstück (1) ein bewegliches Kupplungselement (30) enthält, das zumindest zwischen einer maximal vorstehenden Position, wobei ein Kupplungsteil (31) des Kupplungselements (30) in Höhe der vorgenannten Greiföffnung (28) maximal von dem Eckstück (1) vorsteht, so dass es als Kupplungselement (30) zum Ankuppeln an ein Eckstück (1) eines anderen Behälters (3) dienen kann, das mit einer Öffnung angrenzend an das vorstehende Kupplungselement (30) platziert ist, und einer vollständig eingezogenen Position bewegbar ist, in der sich das bewegliche Kupplungselement (30) vollständig innerhalb des Eckstücks (1) befindet und die Greiföffnung (28) sowie der an diese Greiföffnung (28) angrenzende Teil des Hohlkörpers (4) so weit freigelassen wird, dass das Eckstück (1) in eine Position gebracht wird, in der es von den vorgenannten äußeren Greifmitteln (51, 52) gegriffen werden kann, **dadurch gekennzeichnet, dass** das bewegliche Kupplungselement (30) auch in eine teilweise vorstehende Position gebracht werden kann, wobei der Kupplungsteil (31) des Kupplungselements (30) nur teilweise in Höhe der Greiföffnung (28) von dem Eckstück (1) vorsteht und somit als Führungselement dienen kann.

2. Eckstück (1) nach Anspruch 1, **dadurch gekennzeichnet, dass** die vorgenannte mindestens eine Greföffnung (28) eine solche Form aufweist, dass das Eckstück (1) von einem äußeren Greifmittel (51, 52) in Form eines Hammerschlosses gegriffen werden kann.

3. Eckstück (1) nach einem oder mehreren der vorhergehenden Ansprüche, **dadurch gekennzeichnet, dass** das Eckstück (1) ein erstes Eckstückteil (32), dessen Außenabmessungen und Form einem ISO-genormten Eckstück (13) entsprechen, mit Ausnahme der mindestens einen Greiföffnung (28), die jedoch ebenfalls Teil dieses Eckstückteils (32) ist, sowie ein an das erste Eckstückteil (32) angrenzendes und sich daran anschließendes angrenzendes Eckstückteil (33) enthält, in dem das bewegliche Kupplungselement (30) in der vollständig eingezogenen Position gehalten wird.

4. Eckstück (1) nach Anspruch 3, **dadurch gekennzeichnet, dass** der Hohlkörper (4) eine L-förmige Struktur (34) mit einem ersten balkenförmigen Wandteil (35), der den ersten Eckstückteil (32) bildet, und einem zweiten balkenförmigen Wandteil (36) ist, der den angrenzenden Eckstückteil (33) bildet.

5. Eckstück (1) nach Anspruch 3 und 4, **dadurch gekennzeichnet, dass** das Eckstück (1) mit einem oberen Teil (19) versehen ist, das Teil sowohl des ersten Eckstückteils (32) als auch des zweiten Eckstückteils (33) ist und in dem eine Öffnung (25) vorgesehen ist, von der ein Teil (26) als Greiföffnung (28) dient, und wobei gegenüber dem oberen Teil (19) in dem ersten Eckstückteil (32) ein erstes flaches geschlossenes unteres Teil (20) und in dem zweiten Eckstückteil (33) ein zweites flaches geschlossenes unteres Teil (21) vorgesehen ist und wobei das erste untere Teil (20) in einem Abstand (D) von dem oberen Teil (19) vorsteht, wobei dieser Abstand (D), reduziert mit der Dicke (T) des oberen Teils (19), etwas größer ist als der Höhenunterschied (D') zwischen der Oberseite (37) des Kupplungselements (30) in der maximal vorstehenden Position und der Oberseite (37) des Kupplungselements (30) in der teilweise vorstehenden Position, und wobei das zweite untere Teil (21) in einem Abstand (E) von dem oberen Teil (19) vorsteht, der etwas größer ist als die Höhe (H) des beweglichen Kupplungselements (30).

6. Eckstück (1) nach einem oder mehreren der vorhergehenden Ansprüche, **dadurch gekennzeichnet, dass** die Oberseite (37) des Kupplungselements (30) durch ein Kupplungsteil (31) gebildet wird, das einen Vorsprung (38) an einer Basis (39) des Kupplungselements (30) bildet, wobei das Kupplungsteil (31) mit einer sich seitlich erstreckenden Ausbuchtung (40) versehen ist, wobei zwischen der Basis (39) und dem Kupplungsteil (31) ein verbreiterter Rand (41) vorgesehen ist, dessen Breite (B") größer als die Breite (B) der Greiföffnung (28) ist, so dass der verbreiterte Rand (41) auf dem oberen Teil (19) um die Greiföffnung (28) herum aufliegen kann.

7. Eckstück (1) nach einem oder mehreren der Ansprüche 3 bis 6, **dadurch gekennzeichnet, dass** das angrenzende Eckstückteil (33) mit einer Federplattform (42) versehen ist, die durch ein Federelement (43) abgestützt ist, wobei in der vollständig eingezogenen Position das Kupplungselement (30) auf der Plattform (42) abgestützt ist und sich das Federelement (43) in einer zusammengedrückten Position befindet.

8. Eckstück (1) nach Anspruch 7, **dadurch gekennzeichnet, dass** das Kupplungselement (30) auf beiden Seiten mit einer Längsnut (44) versehen ist, wobei das Kupplungselement (30) aus der vollständig eingezogenen Position in die maximal vorstehende Position gebracht wird, indem zuerst das Kupplungselement (30) in dem angrenzenden Eckstückteil (33) nach oben bewegt wird, während das Federelement (43) entspannt ist, sowie durch anschließendes Bewegen des Kupplungselements (30) über die Plattform (42) vom angrenzenden Eckstückteil (33) zum ersten Eckstückteil (32), und zwar derart, dass die Seitenkanten (45) der Greiföffnung (28) beidseitig in den Längsnuten (44) verschoben werden und wobei durch eine Rückwärtsbewegung das Kupplungselement (30) aus der maximal vorstehenden Position in die vollständig eingezogene Position zurückgestellt wird.

9. Eckstück (1) nach Anspruch 1 und 8, **dadurch gekennzeichnet, dass** das Kupplungselement (30) aus der vollständig eingezogenen Position in die teilweise vorstehende Position gebracht wird, indem das Kupplungselement (30) zuerst teilweise nach oben bewegt wird und dann seitlich über die Plattform (42) von dem angrenzenden Eckstückteil (33) zu dem ersten Eckstückteil (32) geschoben wird, und zwar derart, dass mindestens eine Seitenkante (50) der Basis (39) des Kupplungselements (30) in eine Nut (47) geschoben wird, die an der Innenseite (46) des Hohlkörpers (4) zu einer Seitenwand (14) auf der Höhe des ersten Eckstückteils (32) vorgesehen ist, und wobei das Kupplungselement (30) aus der teilweise vorstehenden Position in die vollständig eingezogene Position zurückgestellt wird, indem möglicherweise zuerst die Plattform (42) nach unten bewegt wird, während das Federelement (43) zusammengedrückt wird, dann das Kupplungselement (30) von dem ersten Eckstückteil (32) auf die Plattform (42) bewegt und schließlich die Plattform (42) weiter nach unten bewegt wird.

10. Eckstück (1) nach einem oder mehreren der Ansprüche 3 bis 6, **dadurch gekennzeichnet, dass** in dem Hohlkörper (4) des Eckstücks (1) ein Führungselement (59) vorgesehen ist, über das das Kupplungselement (30) zwischen der vollständig eingezogenen Position und der maximal vorstehenden Position gleiten kann.

11. Eckstück (1) nach Anspruch 10, **dadurch gekennzeichnet, dass** das Kupplungselement (30) zwei Teile enthält, nämlich ein äußeres Teil (60) und ein inneres Teil (61), das von dem äußeren Teil (60) umgeben ist und das sich in dem äußeren Teil (60) auf und ab bewegen kann, wobei das innere Teil (61) ein Kupplungsteil (31) bildet, das an seiner Oberseite (37) mit einer seitlich verlaufenden Ausbuchtung (40) versehen ist, wobei der Fuß (62) des inneren Teils (61) durch zwei Schenkel (63) gebildet wird, die jeweils aus einem flachen Teil bestehen und die in einem bestimmten Abstand voneinander angeordnet sind, um einen Zwischenraum (64) zu belassen.

12. Eckstück (1) nach Anspruch 10 oder 11, **dadurch gekennzeichnet, dass** das äußere Teil (60) des Kupplungselements (30) auf beiden Seiten (65) mit einer seitlichen Nut versehen ist und dass das Führungselement (59) ein Paar gegenüberliegender Kanten (66) enthält, die an den Seitenwänden (14, 15) in dem Hohlkörper (4) auf beiden Seiten des Eckstücks (1) vorgesehen sind und die jeweils mit einem geraden Stück (69) an beiden Enden (67, 68) versehen sind, und wobei die Kanten (66) in dem Zwischenteil (70) einer sanften Krümmung folgen, wobei die gegenüberliegenden Kanten (66) sich in eine entsprechende Nut (65) des äußeren Teils (60) erstrecken und wobei das Führungselement (59) außerdem ein Paar profilierter aufrechter Trennwände (71) enthält, die an den unteren Teilen (20, 21) des Hohlkörpers (4) vorgesehen sind und über die die Schenkel (63) des inneren Teils (60) des Kupplungselements (30) gleiten können.

13. Eckstück (1) nach einem oder mehreren der Ansprüche 10 bis 12, **dadurch gekennzeichnet, dass** das Kupplungselement (30) aus der vollständig eingezogenen Position in die maximal vorstehende Position gebracht wird, indem man das Kupplungselement (30) über die gegenüberliegenden Kanten (66) und über die profilierten aufrechten Trennwände (71) des Führungselements (59) von dem angrenzenden Eckstückteil (33) zu dem ersten Eckstückteil (32) gleiten lässt, und wobei durch eine Rückwärtsbewegung das Kupplungselement (30) aus der maximal vorstehenden Position in die vollständig eingezogene Position zurückgebracht wird.

14. Eckstück (1) nach Anspruch 11 und 12, **dadurch gekennzeichnet, dass** das Kupplungselement (30) aus der maximal hervorstehenden Position in die teilweise vorstehende Position gebracht wird, indem zuerst das Kupplungselement (30) wieder in die vollständig eingezogene Position gebracht wird und dann das Kupplungselement (30) seitlich so bewegt wird, dass die Schenkel (63) des inneren Teils (61) des Kupplungselements (30) nicht länger auf die profilierten senkrechten Trennwände (71) des Führungselementes (59) ausgerichtet sind, und indem dann das Kupplungselement (30) von dem angrenzenden Eckstückteil (33) zu dem ersten Eckstückteil (32) bewegt wird und wobei das Kupplungselement (30) aus der teilweise vorstehenden Position durch eine Rückwärtsbewegung wieder in die maximal vorstehende Position gebracht wird.

15. Behälter (3), umfassend mindestens einen Bodenrahmen (6), einen Dachrahmen (7) und mindestens vier Eckpfosten (8), wobei die Eckpfosten (8) von dem Dachrahmen (7) zu dem Bodenrahmen (6) reichen, und wobei jeder Eckpfosten (8) an einem seiner Enden (9) mit einem Dacheckstück (10) versehen ist, das Teil des Dachrahmens (7) ist, und an dem anderen Ende (11) mit einem unteren Eckstück (12), das Teil des Bodenrahmens (6) ist, **dadurch gekennzeichnet, dass** die vier Dacheckstücke (10), die Teil des Dachrahmens (7) sind, Eckstücke (1) eines Typs nach einem der vorhergehenden Ansprüche sind.

16. Behälter (3) nach Anspruch 15, der mit Dacheckstücken (10) nach Anspruch 6 versehen ist, **dadurch gekennzeichnet, dass** die seitlichen Ausbuchtungen (40) an den Kupplungselementen (30) der Dacheckstücke (10) an einem ersten kurzen Ende des Behälters (3) beide in einer ersten vorgegebenen Richtung ausgerichtet sind und die seitlichen Ausbuchtungen (40) an den Kupplungselementen (30) der Dacheckstücke (10) an dem gegenüberliegenden kurzen Ende des Behälters (3) beide in einer entgegengesetzten Richtung ausgerichtet sind.

17. Behälter (3) nach Anspruch 15 oder 16, **dadurch gekennzeichnet, dass** die vier unteren Eckstücke (12) jeweils mit einer Öffnung versehen sind, um einen Bodenrahmen (6) des Behälters (3) zu bilden, der auf der Höhe der vier unteren Eckstücke (12) komplementär zu den vier Kupplungsteilen (31) der vier Dacheckstücke (10) des Behälters (3) ist, zumindest soweit sie in die maximal vorstehende Position gebracht wurden, und zwar derart, dass mehrere solcher Behälter (3) desselben Typs passend übereinander gestapelt werden können.

18. Behälter (3) nach Anspruch 17, **dadurch gekennzeichnet, dass** die vier unteren Eckstücke (12) ISO-genormte Eckstücke (13) sind.

19. Behälter (3) nach Anspruch 16 und 18, **dadurch gekennzeichnet, dass** die Kupplungselemente (30) der Dacheckstücke (10) in der maximal vorstehenden Position und die Öffnungen in den ISO-genormten unteren Eckstücken (12) so zueinander ausgerichtet sind, dass identische solcher Behälter (3) aufeinander gestapelt und durch eine kombinierte Bewegung mit einem der Behälter (3), bestehend aus einer Auf- oder Abbewegung und einer Drehbewegung, ohne manuellen Eingriff miteinander kuppelbar und wieder lösbar sind.

20. Greifmechanismus (51), der mit einem Eckstück (1) nach einem oder mehreren der Ansprüche 1 bis 14 zusammenwirken kann, **dadurch gekennzeichnet, dass** der Greifmechanismus (51) mindestens Folgendes aufweist:
- Greifmittel (53), die über die Greiföffnung (28) in den Hohlkörper (4) des optimierten Eckstücks (1) eingeführt werden können, um das Eckstück (1) zu greifen; und,
- Mittel (54) zum Bewegen oder Aktivieren der Bewegung des beweglichen Kupplungselements (30) in die maximal vorstehende Position, in die vollständig eingezogene Position und gegebenenfalls in eine oder mehrere teilweise vorstehende Positionen.

21. Greifmechanismus (51) nach Anspruch 20, **dadurch gekennzeichnet, dass** die Greifmittel (53) mindestens ein Hammerschloss mit einem drehbaren ovalen Ende umfassen, das in die Greiföffnung (28) eingeführt werden kann.

22. Greifer (52) zum Handhaben eines Behälters (3) nach einem oder mehreren der Ansprüche 15 bis 19, **dadurch gekennzeichnet, dass** der Greifer (52) mit vier Greifmechanismen (51) nach Anspruch 20 oder 21 versehen ist, wobei jeder Greifmechanismus (51) mit einem entsprechenden Dacheckstück (10) des Behälters (3) zusammenwirken kann.

23. Greifer (52) nach Anspruch 22, **dadurch gekennzeichnet, dass** der Greifer (52) mit acht Greifmechanismen (51) nach Anspruch 20 oder 21 versehen ist, die so eingerichtet sind, dass mit dem Greifer (52) zwei 20-Fuß-Behälter (3) gleichzeitig gehandhabt werden können, wobei jeder Greifmechanismus (51) mit einem entsprechenden Dacheckstück (10) von einem der Behälter (3) zusammenwirken kann, um beispielsweise die betreffenden Kupplungselemente in eine bestimmte Position zu bewegen und/oder die Behälter gleichzeitig anzuheben oder zu bewegen.

24. Greifer (52) nach Anspruch 22 oder 23, **dadurch gekennzeichnet, dass** die Greifmechanismen (51) an Armen (58) des Greifers vorgesehen sind, die in dem Greifer (52) verschiebbar vorgesehen sind, um die Abstände (J, K) zwischen den Greifmechanismen (51) in Abhängigkeit von den Abmessungen des Dachrahmens (7) des Behälters (3) anpassen zu können.

## Revendications

1. Pièce de coin (1) destinée à former un coin (2) d'un conteneur (3), dans laquelle la pièce de coin (1) contient un corps creux (3) qui est destiné à être appliqué entre les nervures (5) du conteneur (3), dans lequel le corps creux (4) est équipé d'une paroi (19) dans laquelle est pratiquée au moins une ouverture de préhension (28) qui possède une forme telle qu'elle peut être saisie par des moyens de préhension externes (51, 52), dans laquelle, au cours de la préhension, une partie des moyens de préhension externes de ce type peut être insérée à travers l'ouverture de préhension (28) jusque dans le corps creux (4), dans laquelle la pièce de coin (1) contient un élément de couplage mobile (30) qui peut au moins se déplacer entre une position saillante maximale, dans laquelle une partie de couplage (31) de l'élément de couplage (30) fait saillie au maximum à l'extérieur de la pièce de coin (1) au niveau de l'ouverture de préhension susmentionnée (28), d'une manière telle qu'elle peut faire office d'élément de couplage (30) à des fins de couplage à une pièce de coin (1) d'un autre conteneur (3) qui est placé d'une manière telle qu'une ouverture située en position adjacente est placée contre l'élément de couplage faisant saillie (30), et une position complètement rétractée dans laquelle l'élément de couplage mobile (30) est disposé complètement à l'intérieur de la pièce de coin (1), et l'ouverture de préhension (28) de même que la partie du corps creux (4) qui est disposée en position adjacente à cette ouverture de préhension (28) sont laissés libres dans la mesure où la pièce de coin (1) est placée dans une position dans laquelle elle peut être saisie par les moyens de préhension externes susmentionnés (51, 52), **caractérisée en ce que** l'élément de couplage mobile (30) peut également être placé dans une position dans laquelle il fait partiellement saillie, dans laquelle la partie de couplage (31) de l'élément de couplage (30) s'étend uniquement en partie à partir de la pièce de coin (1) au niveau de l'ouverture de préhension (28) et peut par conséquent faire office d'élément de guidage.

2. Pièce de coin (1) selon la revendication 1, **caractérisée en ce que** ladite au moins une ouverture de préhension susmentionnée (28) possède une forme telle que la pièce de coin (1) peut être saisie par un moyen de préhension externe (51, 52) sous la forme de ce qu'il est convenu d'appeler une clé de bras.

3. Pièce de coin (1) selon une ou plusieurs des revendications précédentes, **caractérisée en ce que** la pièce de coin (1) contient une première partie de pièce de coin (32) dont les dimensions externes ainsi que la forme correspondent à celles d'une pièce de coin normalisée ISO (13), à l'exception de ladite au moins une ouverture de préhension (28) qui toutefois fait également partie de cette partie (32) de la pièce de coin, ainsi qu'une partie adjacente de la pièce de coin (33) qui est disposée en position adjacente et qui est reliée à la première partie (32) de la pièce de coin, et dans laquelle l'élément de couplage mobile (30) est maintenu dans la position complètement rétractée.

4. Pièce de coin (1) selon la revendication 3, **caractérisée en ce que** le corps creux (4) représente une structure (34) qui possède une configuration en forme de L qui comprend une première partie (35) faisant office de paroi possédant une configuration en forme de poutre qui forme la première partie (32) de la pièce de coin et une deuxième partie (36) faisant office de paroi possédant une configuration en forme de poutre et qui forme la partie adjacente (33) de la pièce de coin.

5. Pièce de coin (1) selon les revendications 3 et 4, **caractérisée en ce que** la pièce de coin 1) est équipée d'une partie supérieure (19) qui fait partie à la fois de la première partie (32) de la pièce de coin et de la deuxième partie (33) de la pièce de coin et dans laquelle est pratiquée une ouverture (25) dont une partie (26) fait office d'ouverture de préhension (28), et dans laquelle, à l'opposé de la partie supérieure (19) dans la première partie (32) de la pièce de coin, on prévoit une première partie inférieure (20) fermée de forme plate et dans la deuxième partie (33) de la pièce de coin, on prévoit une deuxième partie inférieure (21) fermée de forme plate, et dans laquelle la première partie inférieure (20) fait saillie sur une distance (D) par rapport à la partie supérieure (19), dans laquelle cette distance (D), qui est réduite avec l'épaisseur (T) de la partie supérieure (19), est légèrement supérieure à la différence de hauteur (D') entre le sommet (37) de l'élément de couplage (30) dans la position saillante maximale et le sommet (37) de l'élément de couplage (30) dans la position saillante partielle, et dans laquelle la deuxième partie inférieure (21) fait saillie sur une distance (E) par rapport à la partie supérieure (19), qui est légèrement supérieure à la hauteur (H) de l'élément de couplage mobile (30).

6. Pièce de coin (1) selon une ou plusieurs des revendications précédentes, **caractérisée en ce que** le sommet (37) de l'élément de couplage (30) est formé par une partie de couplage (31) qui forme une protrusion (38) sur une base (39) de l'élément de couplage (30), dans laquelle la partie de couplage (31) est munie d'un bombement (40) qui s'étend dans la direction latérale, dans laquelle, entre la base (39) et la partie de couplage (31), on prévoit un bord élargi (41) dont la largeur (B") est supérieure à la largeur (B) de l'ouverture de préhension (28), d'une manière telle que le bord élargi (41) peut s'appuyer sur la partie supérieure (19) autour de l'ouverture de préhension (28).

7. Pièce de coin (1) selon une ou plusieurs des revendications 3 à 6, **caractérisée en ce que** la partie adjacente (33) de la pièce de coin est munie d'une plate-forme à effet ressort (42) qui est supportée par un élément (43) faisant office de ressort, dans laquelle, dans la position complètement rétractée, l'élément de couplage (30) est supporté sur la plate-forme (42) et l'élément (43) faisant office de ressort se trouve dans une position comprimée.

8. Pièce de coin (1) selon la revendication 7, **caractérisée en ce que** l'élément de couplage (30) est muni, sur les deux côtés, d'une rainure longitudinale (44), dans laquelle l'élément de couplage (30) est placé, à partir de la position complètement rétractée, dans la position saillante maximale en déplaçant d'abord l'élément de couplage (30) vers le haut dans la partie adjacente (33) de la pièce de coin, tandis que l'élément (43) faisant office de ressort est relâché, et en déplaçant ensuite l'élément de couplage (30) par-dessus la plate-forme (42) à partir de la partie adjacente (33) de la pièce de coin jusqu'à la première partie (32) de la pièce de coin, et ceci d'une manière telle que les bords latéraux (45) de l'ouverture de préhension (28) coulissent dans les rainures longitudinales (44) des deux côtés, et dans laquelle par l'intermédiaire d'un mouvement inverse, l'élément de couplage (30) est placé en retour, à partir de la position saillante maximale, dans la position complètement rétractée.

9. Pièce de coin (1) selon les revendications 1 et 8, **caractérisée en ce que** l'élément de couplage (30), à partir de la position complètement rétractée, est placé dans la position saillante partielle en déplaçant d'abord l'élément de couplage (30) de manière partielle vers le haut et en le faisant ensuite glisser dans la direction latérale par-dessus la plate-forme (42) à partir de la partie adjacente (33) de la pièce de coin jusqu'à la première partie (32) de la pièce de coin et ceci d'une manière telle que l'on fait coulisser au moins un bord latéral (50) de la base (39) de l'élément de couplage (30) dans une rainure (47) qui est prévue sur le côté interne (46) du corps creux (4) jusqu'à une paroi latérale (14) au niveau de la première partie (32) de la pièce de coin, et dans laquelle l'élément de couplage (30), à partir de la position saillante partielle, est placé en retour dans la position complètement rétractée en déplaçant d'abord le cas échéant la plate-forme (42) vers le bas, tandis que l'élément (43) faisant office de ressort est comprimé, et en déplaçant ensuite l'élément de couplage (30) à partir de la première partie (32) de la pièce de coin sur la plate-forme (42) et en déplaçant enfin la plate-forme (42) davantage vers le bas.

10. Pièce de coin (1) selon une ou plusieurs des revendications 3 à 6, **caractérisée en ce que**, dans le corps creux (8) de la pièce de coin (1), on prévoit un élément de guidage (59) par-dessus lequel l'élément de couplage (30) peut coulisser entre la position complètement rétractée et la position saillante maximale.

11. Pièce de coin (1) selon la revendication 10, **caractérisée en ce que** l'élément de couplage (30) contient deux parties, de manière plus spécifique, une partie externe (60) et une partie interne (61) qui est entourée par la partie externe (60) et qui peut être déplacée vers le haut et vers le bas dans la partie externe (60), dans laquelle la partie interne (61) forme une partie de couplage (31) qui est munie, à son sommet (37), d'un bombement (40) qui s'étend dans la direction latérale, dans laquelle la base (62) de la partie interne (61) est formée par deux branches (63) qui sont chacune constituées d'une partie plate et qui sont disposées à une certaine distance l'une de l'autre afin de laisser subsister un espace intermédiaire (64).

12. Pièce de coin (1) selon la revendication 10 ou 11, **caractérisée en ce que** la partie externe (60) de l'élément de couplage (30) est munie d'une rainure latérale sur ses deux côtés (65) et **en ce que** les éléments de guidage (59) contient une paire de bords opposés (66) qui sont prévus sur les parois latérales (14, 15) dans le corps creux (4) de chaque côté de la pièce de coin (1) et qui sont chacun munis d'une pièce rectiligne (69) sur leurs deux extrémités (67, 68), et dans laquelle les bords (66), dans la partie intermédiaire (70), suivent une courbe continue, dans laquelle les bords opposés (66) s'étendent jusque dans une rainure correspondante (65) de la partie externe (60) et dans laquelle l'élément de guidage (59) contient en outre une paire de parois de séparation dressées profilées (71) qui sont prévues sur les parties intérieures (20, 21) du corps creux (4) et par-dessus lesquelles les branches (63) de la partie interne (60) de l'élément de couplage (30) peuvent coulisser.

13. Pièce de coin (1) selon une ou plusieurs des revendications 10 à 12, **caractérisée en ce que** l'élément de couplage (30), à partir de la position complètement rétractée, est placé dans la position saillante maximale en faisant coulisser l'élément de couplage (30) par-dessus les bords opposés (66) et par-dessus les parois de séparations dressées profilées (71) de l'élément de guidage (59) à partir de la partie adjacente (33) de la pièce de coin jusqu'à la première partie (32) de la pièce de coin et dans laquelle, par l'intermédiaire d'un mouvement inverse, l'élément de couplage (30) est placé en retour, à partir de la position saillante maximale, dans la position complètement rétractée.

14. Pièce de coin (1) selon les revendications 11 et 12, **caractérisée en ce que** l'élément de couplage (30) est placé, à partir de la position saillante maximale, dans la position saillante partielle, en plaçant d'abord l'élément de couplage (30) en retour dans la position rétractée et en déplaçant ensuite l'élément de couplage (30) dans la direction latérale d'une manière telle que les branches (63) de la partie interne (61) de l'élément de couplage (30) ne sont plus alignés avec les parois de séparations dressées profilées (71) de l'élément de guidage (59) et en déplaçant ensuite l'élément de couplage (30) à partir de la partie adjacente (33) de la pièce de coin jusqu'à la première partie (32) de la pièce de coin et dans laquelle l'élément de couplage (30) est placé à partir de la position saillante partielle en retour dans la position saillante maximale à l'intervention d'un mouvement inverse.

15. Conteneur (3) qui comprend au moins une structure de base (6), une structure (7) faisant office de toit et au moins quatre montants de coins (8), lesdites montants de coins (8) s'étendant à partir de la structure (7) faisant office de toit jusqu'à la structure de base (6), et dans lequel chaque montant de coin (8), sur une de ses extrémités (9), est muni d'une pièce de coin (10) du toit qui fait partie de la structure (7) faisant office de toit, et, sur l'autre extrémité (11) d'une pièce de coin (12) de la base qui fait partie de la structure de base (6), **caractérisé en ce que** les quatre pièces de coin (10) du toit qui font partie de la structure (7) faisant office de toit représentent des pièces de coin (1) d'un type qui est conforme à l'une quelconque des revendications précédentes.

16. Conteneur (3) selon la revendication 15, qui est équipé de pièces de coin (10) du toit selon la revendication 6, **caractérisé en ce que** les bombements latéraux (40) sur les éléments de couplage (30) des pièces de coin (10) du toit sur une première extrémité étroite du conteneur (3) sont tous deux orientés dans une première direction donnée et les bombements latéraux (40) sur les éléments de couplage (30) des pièces de coin (10) du toit sur l'extrémité étroite opposée du conteneur (3) sont tous deux orientés dans une direction opposée.

17. Conteneur (3) selon la revendication 15 ou 16, **caractérisé en ce que** les quatre pièces de coin (12) de la base sont chacune munie d'une ouverture destinée à former une structure de base (6) du conteneur (3) qui, au niveau des quatre pièces de coin (12) de la base, est complémentaire aux quatre parties de couplage (31) des quatre pièces de coin (10) du toit du conteneur (3), au moins dans la mesure où ils ont été placés dans la position saillante maximale et d'une manière telle qu'un certain nombre de ces conteneurs (3) du même type peuvent être empilés l'un par-dessus l'autre d'une manière ajustée.

18. Conteneur (3) selon la revendication 17, **caractérisé en ce que** les quatre pièces de coin (12) de la base représentent des pièces de coin (13) normalisées ISO.

19. Conteneur (3) selon les revendications 16 et 18, **caractérisé en ce que** les éléments de couplage (30) des pièces de coin (10) du toit dans la position saillante maximale et les ouvertures dans les pièces de coin (12) de la base normalisées ISO sont alignées les uns par rapport aux autres, d'une manière telle que des conteneurs identiques de ce type (3) peuvent être empilés l'un sur l'autre et peuvent être couplés l'un à l'autre et à nouveau détachés en mettant en oeuvre un mouvement combiné avec un des conteneurs (3), consistant en un mouvement de déplacement vers le haut ou vers le bas et en un mouvement de rotation, sans aucune intervention manuelle.

20. Mécanisme de préhension (51) qui peut coopérer avec une pièce de coin (1) selon une ou plusieurs des revendications 1 à 14, **caractérisé en ce que** le mécanisme de préhension (51) possède au moins :
- des moyens de préhension (53) qui peuvent être insérés en passant par l'ouverture de préhension (28) dans le corps creux (4) de la pièce de coin perfectionnée (1) dans le but de saisir la pièce de coin (1) ; et
- un moyen (54) destiné à déplacer l'élément de couplage mobile (30) ou à activer le mouvement de ce dernier jusque dans la position saillante maximale, dans la position complètement rétractée, et selon le cas, jusque dans une ou plusieurs positions saillantes partielles.

21. Mécanisme de préhension (51) selon la revendication 20, **caractérisé en ce que** les moyens de préhension (53) comprennent au moins ce qu'il est convenu d'appeler une clé de bras, qui comprend une extrémité ovale rotative qui peut être insérée dans l'ouverture de préhension (28).

22. Dispositif de préhension (52) destiné à la manipulation d'un conteneur (3) selon une ou plusieurs des revendications 15 à 19, **caractérisé en ce que** le dispositif de préhension (52) est équipé de quatre mécanismes de préhension (51) selon la revendication 20 ou 21, dans lequel chaque mécanisme de préhension (51) peut coopérer avec une pièce de coin correspondante (10) du toit du conteneur (3).

23. Dispositif de préhension (52) selon la revendication 22, **caractérisé en ce que** le dispositif de préhension (52) est équipé de huit mécanismes de préhension (51) selon la revendication 20 ou 21, qui sont conçus d'une manière telle qu'avec le dispositif de préhension (52) deux conteneurs de 20 pieds (3) peuvent être manipulés de manière simultanée, dans lequel chaque mécanisme de préhension (51) peut coopérer avec une pièce de coin correspondante (10) du toit d'un des conteneurs (3), par exemple dans le but de déplacer les éléments de couplage en question jusqu'à une certaine position et/ou dans le but de soulever ou de déplacer les conteneurs d'une manière simultanée.

24. Dispositif de préhension (52) selon la revendication 22 ou 23, **caractérisé en ce que** les mécanismes de préhension (51) sont prévus sur des bras (58) du dispositif de préhension, qui ont été prévus de manière à pouvoir coulisser dans le dispositif de préhension (52) dans le but de pouvoir adapter les distances (J, K) entre les mécanismes de préhension (51) en fonction des dimensions de la structure (7) faisant office de toit du conteneur (3).
